(19) **Europäisches Patentamt**
**European Patent Office**
**Office européen des brevets**

(11) **EP 4 282 223 B1**

(12) **EUROPEAN PATENT SPECIFICATION**

(45) Date of publication and mention
of the grant of the patent:
**29.05.2024 Bulletin 2024/22**

(21) Application number: **21810454.5**

(22) Date of filing: **11.11.2021**

(51) International Patent Classification (IPC):
**H04W 76/34** *(2018.01)*    **H04W 76/16** *(2018.01)*
**H04W 76/22** *(2018.01)*

(52) Cooperative Patent Classification (CPC):
**H04W 76/34; H04W 76/16; H04W 76/22**

(86) International application number:
**PCT/SE2021/051131**

(87) International publication number:
**WO 2022/159014 (28.07.2022 Gazette 2022/30)**

(54) **SIGNALING FOR RELEASING A SECONDARY CELL GROUP (SCG) CONFIGURATION**

SIGNALISIERUNG ZUR FREIGABE EINER SEKUNDÄRZELLENGRUPPENKONFIGURATION

SIGNALISATION POUR LIBÉRER UNE CONFIGURATION DE GROUPE DE CELLULES
SECONDAIRES (SCG)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.01.2021 US 202163141241 P**

(43) Date of publication of application:
**29.11.2023 Bulletin 2023/48**

(73) Proprietor: **Telefonaktiebolaget LM Ericsson
(publ)
164 83 Stockholm (SE)**

(72) Inventors:
• **ORSINO, Antonino
  02480 Kirkkonummi (FI)**
• **WAGER, Stefan
  02360 Espoo (FI)**
• **PALM, Håkan
  352 55 Växjö (SE)**

(74) Representative: **Ericsson
Patent Development
Torshamnsgatan 21-23
164 80 Stockholm (SE)**

(56) References cited:
**WO-A1-2019/031948**

• **"3rd Generation Partnership Project; Technical
Specification Group Radio Access Network;
Evolved Universal Terrestrial Radio Access
(E-UTRA) and NR; Multi-connectivity; Stage 2
(Release 16)", 3GPP STANDARD; TECHNICAL
SPECIFICATION; 3GPP TS 37.340, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG2, no. V16.4.0 6
January 2021 (2021-01-06), pages 1-84,
XP051999626, Retrieved from the Internet:
URL:https://ftp.3gpp.org/Specs/archive/37_
series/37.340/37340-g40.zip 37340-g40.docx
[retrieved on 2021-01-06]**

**Description**

TECHNICAL FIELD

This document is generally related to dual connectivity (DC) in wireless networks and is more particularly related to techniques for releasing a secondary cell group (SCG) configuration by a secondary node (SN) in DC.

BACKGROUND

In the fourth-generation (4G) and fifth-generation (5G) wireless networks specified by members of the 3$^{rd}$-Generation Partnership Project (3GPP), when carrier aggregation (CA) for a user equipment (UE) is configured, the UE only has one Radio Resource Control (RRC) connection with the network. Further, at RRC connection establishment, re-establishment, or handover, one serving cell provides the non-access stratum (NAS) mobility information, and at RRC connection re-establishment, or handover, one serving cell provides the security input. This cell is referred to as the Primary Cell (PCell). In addition, depending on UE capabilities, Secondary Cells (SCells) can be configured to form, together with the PCell, a set of serving cells. The configured set of serving cells for a UE therefore always consists of one PCell and one or more SCells. Further, when dual connectivity is configured, it can be the case that one carrier under a secondary cell group (SCG) is used as a so-called Primary SCell (PSCell). Hence, in this case there may be one PCell and one or more SCell(s) in a Master Cell Group (MCG) and one PSCell and one or more SCell(s) in the SCG.

The reconfiguration, addition and removal of SCells can be performed by RRC. At intra-radio access technology (intra-RAT) handover, RRC can also add, remove, or reconfigure SCells for usage with the target PCell. When adding a new SCell, dedicated RRC signalling is used for sending all required system information of the SCell, which means that, while in connected mode, UEs need not acquire broadcasted system information directly from the SCells.

In 3GPP, dual-connectivity (DC) solutions have been specified both for LTE, the 4G radio access technology, and between LTE and NR, the 5G radio access technology. In DC, two nodes are involved, a master node (MN or MeNB) and a Secondary Node (SN, or SeNB). Multi-connectivity (MC) is the more general case, when there are two or more nodes involved. Also, it has been proposed in 3GPP that DC is used in the Ultra Reliable Low Latency Communications (URLLC) cases in order to enhance robustness and to avoid connection interruptions.

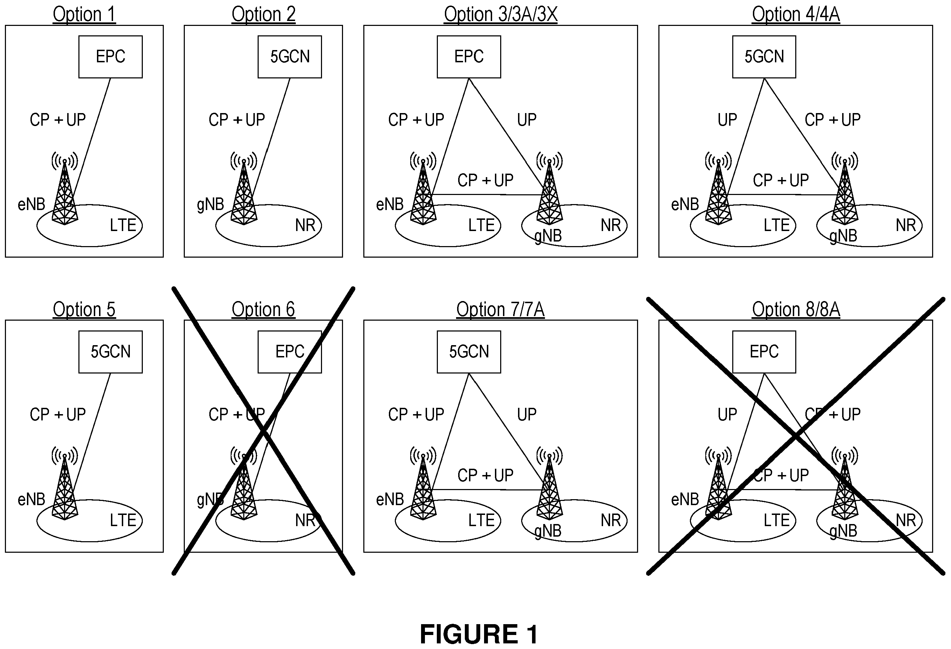

There are several different ways to deploy 5G networks, with or without interworking with LTE (also referred to as E-UTRA) and the evolved packet core (EPC), as depicted in Figure 1. In principle, NR and LTE can be deployed without any interworking, an approach referred to as NR stand-alone (SA) operation. That is, a gNB in NR can be connected to 5G core network (5GC) and an eNB can be connected to EPC with no interconnection between the two, as shown in Option 1 and Option 2 in Figure 1. On the other hand, the first supported version of NR is the so-called EN-DC (E-UTRAN-NR Dual Connectivity) illustrated by Option 3 in Figure 1. In such a deployment, dual connectivity between NR and LTE is applied, with LTE as the master and NR as the secondary node. The RAN node (gNB) supporting NR may not have a control plane connection to core network (EPC), instead relying on the LTE as master node (MeNB). This is also referred to as "Non-standalone NR" or "NSA NR." Notice that in this case the functionality of an NR cell is limited to use for connected mode UEs as a booster and/or diversity leg; an RRC_IDLE UE cannot camp on these NR cells.

With the introduction of the 5G core network (5GC, or SGCN), other options may be also valid. As mentioned above, option 2 supports stand-alone NR deployment where the NR gNB is connected to 5GC. Similarly, LTE can also be connected to 5GC using Option 5 (also known as eLTE, E-UTRA/SGC, or LTE/5GC and the node can be referred to as an ng-eNB). In these cases, both NR and LTE are seen as part of the NG-RAN (and both the ng-eNB and the gNB can be referred to as NG-RAN nodes). It is worth noting that Option 4 and option 7 are other variants of dual connectivity between LTE and NR which will be standardized as part of NG-RAN connected to 5GC, denoted by MR-DC (Multi-Radio Dual Connectivity). So, under the MR-DC umbrella, there are:

- EN-DC (Option 3): LTE is the master node and NR is the secondary (EPC CN employed)

- NE-DC (Option 4): NR is the master node and LTE is the secondary (SGCN employed)

- NGEN-DC (Option 7): LTE is the master node and NR is the secondary (SGCN employed)

- NR-DC (variant of Option 2): Dual connectivity where both the master and secondary are NR (SGCN employed).

Because migration plans for these options may differ from different operators, it is possible to have deployments with multiple options in parallel in the same network. Thus, for example, there could be eNB base stations supporting Options 3, 5 and 7 in the same network as NR base stations supporting Options 2 and 4. In combination with dual connectivity solutions between LTE and NR it is also possible to support CA (Carrier Aggregation) in each cell group (i.e., MCG and SCG) and dual connectivity between nodes on same RAT (e.g., NR-NR DC). For the LTE cells, a consequence of these different deployments is the co-existence of LTE cells associated to eNBs connected to EPC, 5GC or both EPC/SGC.

LTE DC and MR-DC (multi-RAT DC) are designed differently when it comes to which nodes control what. There are two options:

- A centralized solution (like LTE-DC),

- A decentralized solution (like MR-DC, which includes (NG)EN-DC, NE-DC, and NR-DC).

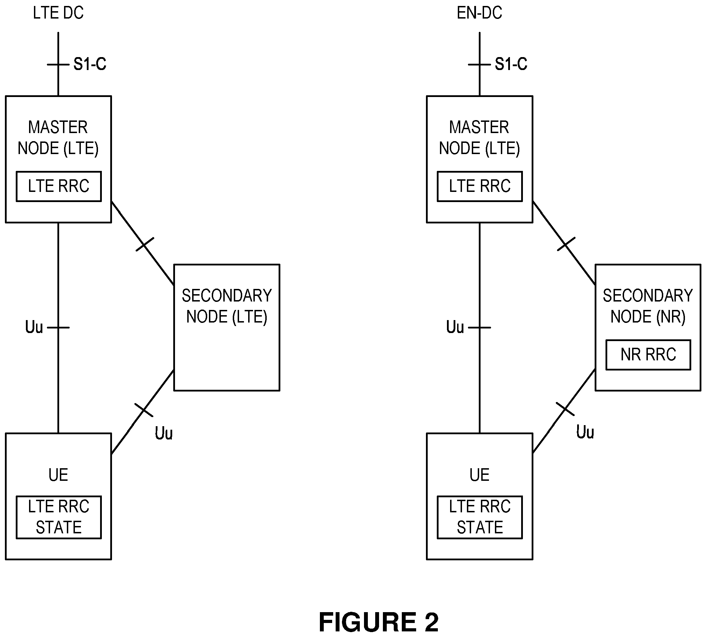

Figure 2 shows the schematic control plane architecture for LTE DC and EN-DC. This architecture also applies to the other MR-DC options. The main difference between the illustrated options is that in EN-DC the SN has a separate RRC entity (NR RRC). This means that the SN can also control the UE, sometimes without the knowledge of the MN, but often the SNs need to coordinate with the MN. In LTE-DC, on the other hand, the RRC decisions always come from the MN (MN to UE). Note, however, the SN still decides the configuration of the SN, since it is only the SN itself that has knowledge of what kind of resources, capabilities, etc., it has.

For EN-DC, major changes compared to LTE DC are:

- The introduction of split bearer from the SN (known as SCG split bearer),

- The introduction of split bearer for RRC,

- The introduction of a direct RRC from the SN (also referred to as SCG SRB).

In summary, DC allows an LTE-capable UE to be connected to two nodes - MeNB and SeNB - and to receive data from both nodes, thereby increasing its data rate. The MeNB (or MN) provides system information, terminates the control plane (CP), and can terminate the user plane (UP).

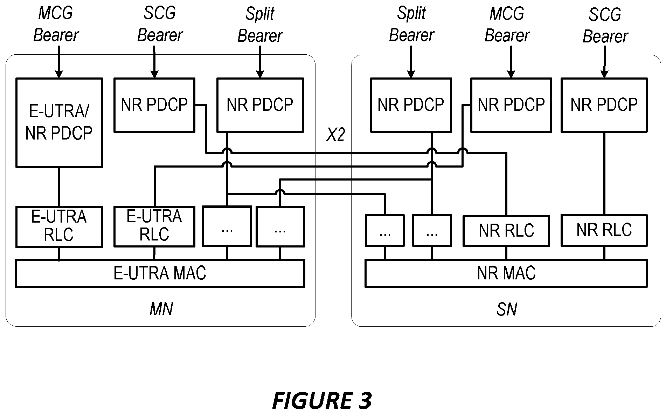

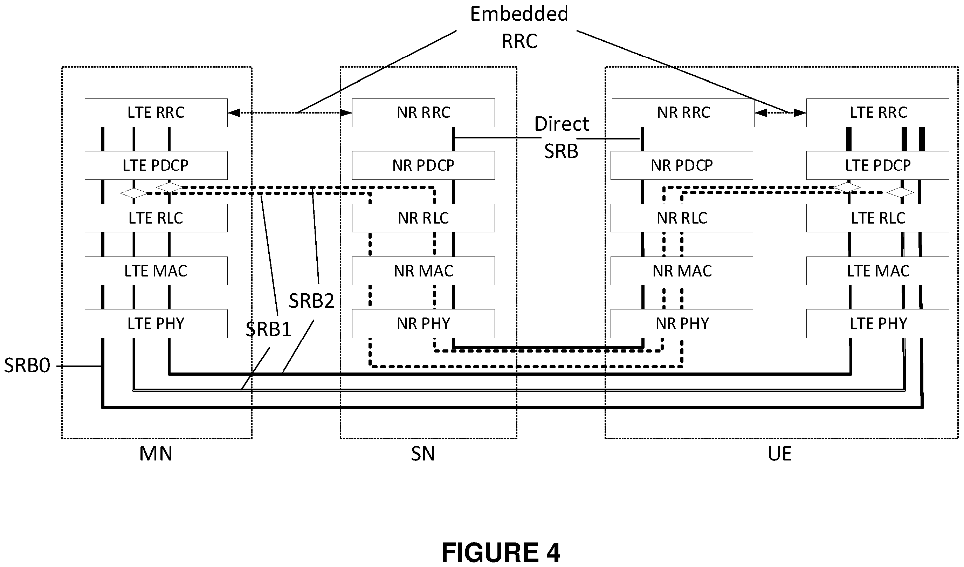

Figures 3 and 4 show the UP and Control Plane (CP) architectures for EN-DC.

The SN is sometimes referred to as SgNB (where gNB is an NR base station) and the MN as MeNB, in the case that the LTE is the master node and NR is the secondary node. In the case where NR is the master and LTE is the secondary node, the corresponding terms are SeNB and MgNB.

Split RRC messages are mainly used for creating diversity, and the sender can decide either to choose one of the links for scheduling the RRC messages, or to duplicate the message over both links. In the downlink, the path switching between the MCG or SCG legs or duplication on both is left to network implementation. On the other hand, for the UL, the network configures the UE to use the MCG, SCG or both legs. The terms "leg", "path" and "RLC bearer" (Radio Link Control bearer) are used interchangeably throughout this document.

Secondary Node Modification - MN/SN -initiated

For EN-DC, the Secondary Node Modification procedure may be initiated either by the MN or by the SN and be used to modify, establish, or release bearer contexts, to transfer bearer contexts to and from the SN, or to modify other properties of the UE context within the same SN. It may also be used to transfer an NR RRC message from the SN to the UE via the MN and the response from the UE via MN to the SN, e.g., when Signaling Radio Bearer type 3 (SRB3) is not used. In case of Continuous Packet Connectivity (CPC), this procedure is used to configure or modify CPC configuration within the same SN.

The Secondary Node modification procedure does not necessarily need to involve signalling towards the UE.

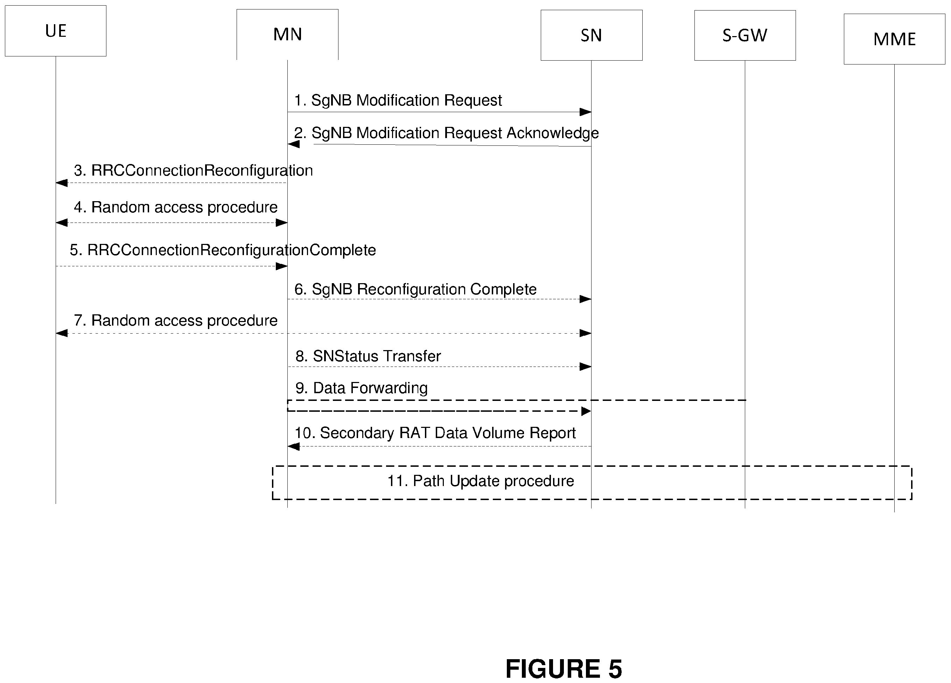

Figure 5, which is reproduced from 3GPP specifications, illustrates an MN-initiated SN modification procedure.

The MN uses the procedure to initiate configuration changes of the SCG within the same SN, e.g., the addition, modification or release of SCG bearer(s) and/or the SCG RLC bearer of split bearer(s), as well as configuration changes for SN terminated MCG bearers. Bearer termination point change is realized by adding the new bearer configuration and releasing the old bearer configuration within a single MN-initiated SN Modification procedure for the respective E-UTRAN Radio Access Bearer (E-RAB). The MN uses this procedure to perform handover within the same MN while keeping the SN. The MN also uses the procedure to query the current SCG configuration, e.g., when delta configuration is applied in an MN-initiated SN change. The MN also uses the procedure to provide the S-RLF related information to the SN. The MN may not use the procedure to initiate the addition, modification or release of SCG SCells. The SN may reject the request, except if it concerns the release of SN terminated bearer(s) or the SCG RLC bearer of MN terminated bearer(s), or if it is used to perform handover within the same MN while keeping the SN.

Details of the procedure are as follows:

1. The MN sends the SgNB Modification Request message, which may contain bearer context related or other UE context related information, data forwarding address information (if applicable) and the requested SCG configuration information, including the UE capability coordination result to be used as basis for the reconfiguration by the SN. In case a security key update in the SN is required, a new SgNB Security Key is included. In case of SCG RLC re-establishment for E-RABs configured with an MN-terminated bearer with an SCG RLC bearer for which no bearer type change is performed, the MN provides a new UL GPRS Tunneling Protocol (GTP) tunnel endpoint to the SN. The SN shall continue sending uplink (UL) Packet Data Convergence Protocol (PDCP) PDUs to the MN with the previous UL GTP tunnel endpoint until it re-establishes the RLC and use the new UL GTP tunnel endpoint after re-establishment. In case of PDCP re-establishment for E-RABs configured with an SN terminated bearer with an MCG RLC bearer for which no bearer type change is performed, the MN provides a new downlink (DL) GTP tunnel endpoint to the SN. The SN shall continue sending DL PDCP PDUs to the MN with the previous DL GTP tunnel endpoint until it performs PDCP re-establishment and use the new DL GTP tunnel endpoint starting with the PDCP re-establishment.

2. The SN responds with the SgNB Modification Request Acknowledge message, which may contain SCG radio resource configuration information within a NR RRC configuration message and data forwarding address information (if applicable). In case of a security key update (with or without PSCell change), for E-RABs configured with the MN terminated bearer option that require X2-U resources between the MN and the SN, for which no bearer type change is performed, the SN provides a new DL GTP tunnel endpoint to the MN. The MN shall continue sending DL PDCP PDUs to the SN with the previous DL GTP tunnel endpoint until it performs PDCP re-establishment or PDCP data recovery, and use the new DL GTP tunnel endpoint starting with the PDCP re-establishment or data recovery. In case of a security key update (with or without PSCell change), for E-RABs configured with the SN terminated bearer option that require X2-U resources between the MN and the SN, for which no bearer type change is performed, the SN provides a new UL GTP tunnel endpoint to the MN. The MN shall continue sending UL PDCP PDUs to the SN with the previous UL GTP tunnel endpoint until it re-establishes the RLC and use the new UL GTP tunnel endpoint after re-establishment.

3-5. The MN initiates the RRC connection reconfiguration procedure, including the NR RRC configuration message. The UE applies the new configuration, synchronizes to the MN (if instructed, in case of intra-MN handover) and replies with *RRCConnectionReconfigurationComplete,* including a NR RRC response message, if needed. In case the UE is unable to comply with (part of) the configuration included in the *RRCConnectionReconfiguration* message, it performs the reconfiguration failure procedure.

6. Upon successful completion of the reconfiguration, the success of the procedure is indicated in the SgNB Reconfiguration Complete message.

7. If instructed, the UE performs synchronisation towards the PSCell of the SN as described in SgNB addition procedure. Otherwise, the UE may perform UL transmission after having applied the new configuration.

8. If PDCP termination point is changed for bearers using RLC AM, and when RRC full configuration is not used, the SN Status Transfer takes place between the MN and the SN.
NOTE 0: The SN may not be aware that a SN terminated bearer requested to be released is reconfigured to a MN terminated bearer. The SN Status for the released SN terminated bearers with RLC AM may also be transferred to the MN.

9. If applicable, data forwarding between MN and the SN takes place.

10. The SN sends the Secondary RAT Data Usage Report message to the MN and includes the data volumes delivered to and received from the UE over the NR radio for the E-RABs to be released and for the E-RABs for which the S1 UL GTP Tunnel endpoint was requested to be modified.
NOTE 1: The order the SN sends the Secondary RAT Data Usage Report message and performs data forwarding with MN is not defined. The SN may send the report when the transmission of the related bearer is stopped.

11. If applicable, a path update is performed.

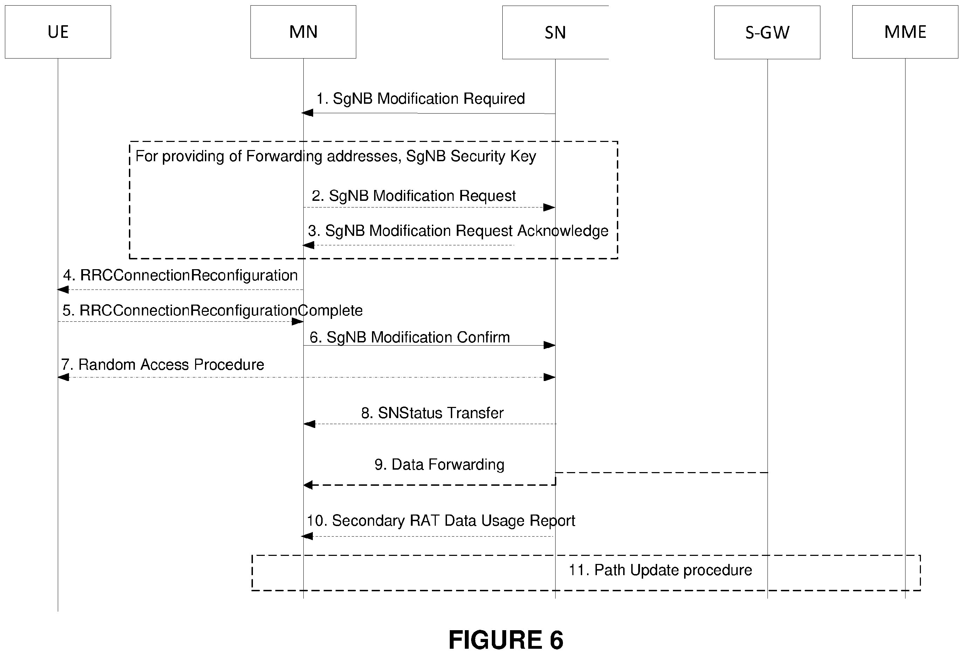

Figure 6 illustrates an example of an SN-initiated SN modification procedure, with MN involvement. The SN uses this procedure to perform configuration changes of the SCG within the same SN, e.g., to trigger the release of SCG bearer(s) and the SCG RLC bearer of split bearer(s) (upon which the MN may release the bearer or maintain current bearer type or reconfigure it to an MCG bearer, either MN terminated or SN terminated), and to trigger PSCell change (e.g., when a new security key is required or when the MN needs to perform PDCP data recovery). The MN cannot reject the release request of SCG bearer and the SCG RLC bearer of a split bearer.

Details of the procedure shown in Figure 6 are as follows:

1. The SN sends the SgNB Modification Required message including a NR RRC configuration message, which may contain bearer context related, other UE context related information and the new SCG radio resource configuration. For bearer release or modification, a corresponding E-RAB list is included in the SgNB Modification Required message. In case of change of security key, the PDCP Change Indication indicates that a S-$K_{gNB}$ update is required. In case the MN needs to perform PDCP data recovery, the PDCP Change Indication indicates that PDCP data recovery is required.
The SN can decide whether the change of security key is required.

2/3. The MN-initiated SN Modification procedure may be triggered by the SN Modification Required message (e.g. to provide information such as data forwarding addresses, new SN security key, measurement gap, etc.)
NOTE 2: If only SN security key is provided in step 2, the MN does not need to wait for the reception of step 3 to initiate the RRC connection reconfiguration procedure.

4. The MN sends the *RRCConnectionReconfiguration* message including a NR RRC configuration message to the UE including the new SCG radio resource configuration.

5. The UE applies the new configuration and sends the *RRCConnectionReconfigurationComplete* message, including an encoded NR RRC response message, if needed. In case the UE is unable to comply with (part of) the configuration included in the *RRCConnectionReconfiguration* message, it performs the reconfiguration failure procedure.

6. Upon successful completion of the reconfiguration, the success of the procedure is indicated in the SgNB Modification Confirm message containing the encoded NR RRC response message, if received from the UE.

7. If instructed, the UE performs synchronisation towards the PSCell of the SN as described in SN addition procedure. Otherwise, the UE may perform UL transmission after having applied the new configuration.

8. If PDCP termination point is changed for bearers using RLC AM, and when RRC full configuration is not used, the SN Status Transfer takes place between the MN and the SN.
NOTE 2a: The SN may not be aware that a SN terminated bearer requesting to release is reconfigured to a MN terminated bearer. The SN Status for the released SN terminated bearers with RLC AM may also be transferred to the MN.

9. If applicable, data forwarding between MN and the SN takes place.

10. The SN sends the Secondary RAT Data Usage Report message to the MN and includes the data volumes delivered to and received from the UE over the NR radio for the E-RABs to be released.
NOTE 3: The order the SN sends the Secondary RAT Data Usage Report message and performs data forwarding with MN is not defined. The SN may send the report when the transmission of the related bearer is stopped.

11. If applicable, a path update is performed.

For MR-DC with 5GC, the SN Modification procedure may again be initiated either by the MN or by the SN and be used to modify the current user plane resource configuration, e.g., related to PDU session, quality-of-service (QoS) flow or DRB, or to modify other properties of the UE context within the same SN. It may also be used to transfer an RRC message from the SN to the UE via the MN and the response from the UE via MN to the SN (e.g., when SRB3 is not used). In NGEN-DC and NR-DC, the RRC message is an NR message (i.e., *RRCReconfiguration*) whereas in NE-DC it is an E-UTRA message (i.e., *RRCConnectionReconfiguration*). In case of CPC, this procedure is used to configure or modify CPC configuration within the same SN. The CPC configuration cannot be used to configure target PSCell in NE-DC.

The SN modification procedure does not necessarily need to involve signaling towards the UE.

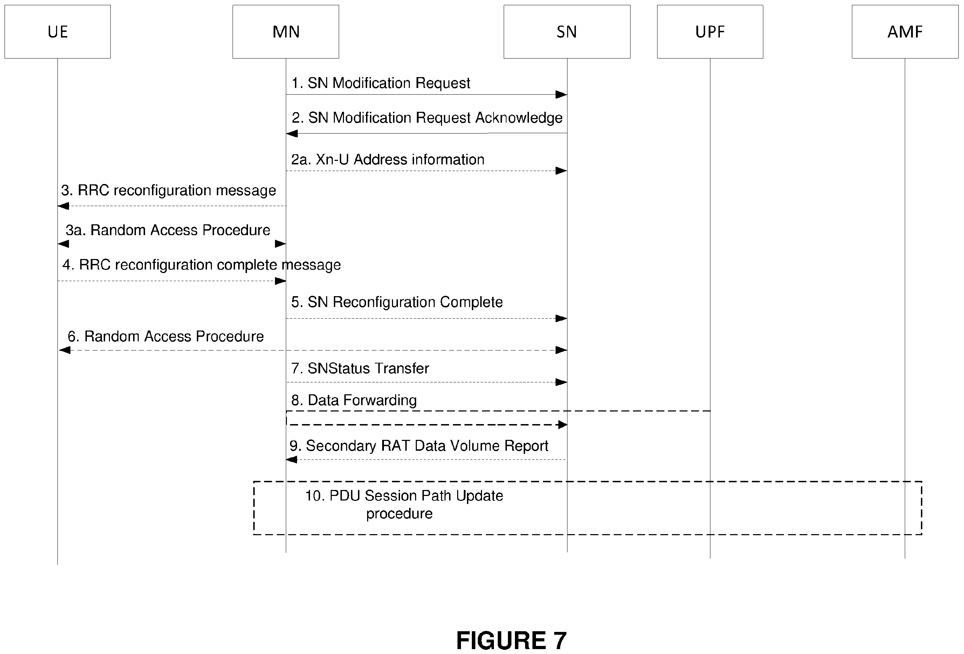

Figure 7 illustrates an MR-DC MN-initiated SN modification procedure.

The MN uses this procedure to initiate configuration changes of the SCG within the same SN, including addition, modification or release of the user plane resource configuration. The MN uses this procedure to perform handover within the same MN while keeping the SN, when the SN needs to be involved (i.e., in NGEN-DC). The MN also uses the procedure to query the current SCG configuration, e.g., when delta configuration is applied in an MN-initiated SN change. The MN also uses the procedure to provide the S-RLF related information to the SN or to provide additional available DRB IDs to be used for SN terminated bearers. The MN may not use the procedure to initiate the addition, modification or release of SCG SCells. The SN may reject the request, except if it concerns the release of the user plane resource configuration, or if it is used to perform handover within the same MN while keeping the SN.

Details of the procedure shown in Figure 7 are as follows:

1. The MN sends the SN Modification Request message, which may contain user plane resource configuration related or other UE context related information, PDU session level Network Slice info and the requested SCG configuration information, including the UE capabilities coordination result to be used as basis for the reconfiguration by the SN. In case a security key update in the SN is required, a new SN Security Key is included.

2. The SN responds with the SN Modification Request Acknowledge message, which may contain new SCG radio configuration information within an SN RRC reconfiguration message, and data forwarding address information (if applicable).

NOTE 1: For MN-terminated bearers to be setup for which PDCP duplication with CA is configured in NR SCG side, the MN allocates up to 4 separate Xn-U bearers and the SN provides a logical channel ID for primary or split secondary path to the MN.

For SN-terminated bearers to be setup for which PDCP duplication with CA is configured in NR MCG side, the SN allocates up to 4 separate Xn-U bearers and the MN provides a logical channel ID for primary or split secondary path to the SN via an additional MN-initiated SN modification procedure.

2a. When applicable, the MN provides data forwarding address information to the SN. For SN terminated bearers using MCG resources, the MN provides Xn-U DLTNL address information in the Xn-U Address Indication message.

3/4. The MN initiates the RRC reconfiguration procedure, including an SN RRC reconfiguration message. The UE applies the new configuration, synchronizes to the MN (if instructed, in case of intra-MN handover) and replies with MN RRC reconfiguration complete message, including an SN RRC response message, if needed. In case the UE is unable to comply with (part of) the configuration included in the MN RRC reconfiguration message, it performs the reconfiguration failure procedure.

5. Upon successful completion of the reconfiguration, the success of the procedure is indicated in the SN Reconfiguration Complete message.

6. If instructed, the UE performs synchronisation towards the PSCell of the SN as described in SN addition procedure. Otherwise, the UE may perform UL transmission after having applied the new configuration.

7. If PDCP termination point is changed for bearers using RLC AM, and when RRC full configuration is not used, the SN Status Transfer takes place between the MN and the SN.

8. If applicable, data forwarding between MN and the SN takes place.

9. The SN sends the Secondary RAT Data Usage Report message to the MN and includes the data volumes delivered to and received from the UE.
NOTE 2: The order the SN sends the Secondary RAT Data Usage Report message and performs data forwarding with MN is not defined. The SN may send the report when the transmission of the related QoS flow is stopped.

10. If applicable, a PDU Session path update procedure is performed.

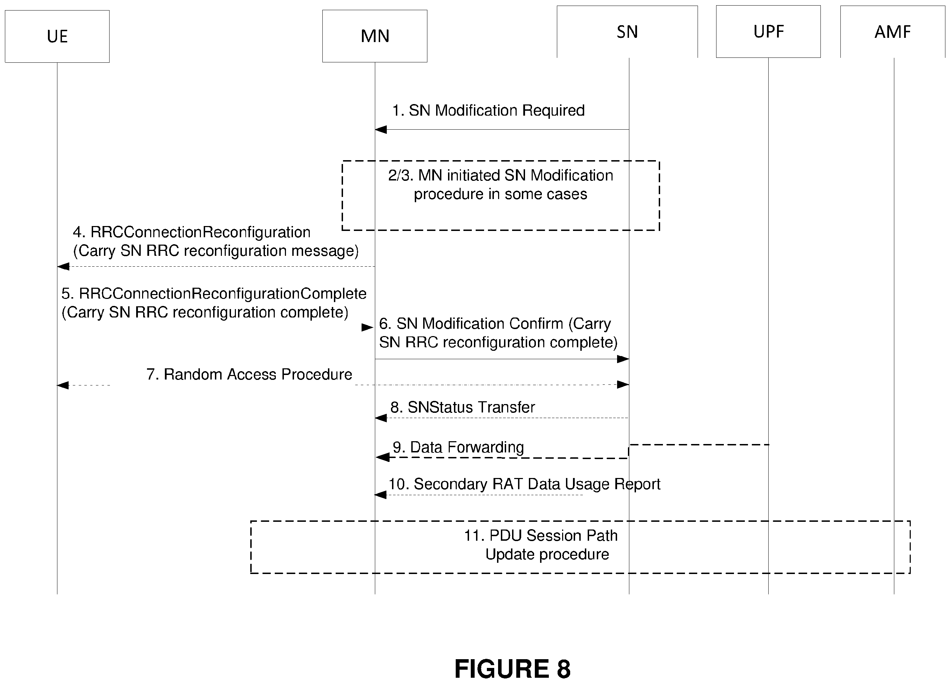

Figure 8 illustrates an MR-DC SN-initiated SN modification with MN involvement.
The SN uses this procedure to perform configuration changes of the SCG within the same SN, e.g., to trigger the modification/release of the user plane resource configuration and to trigger PSCell changes (e.g., when a new security key is required or when the MN needs to perform PDCP data recovery). The MN cannot reject the release request of PDU session/QoS flows. The SN also uses the procedure to request the MN to provide more DRB IDs to be used for SN-terminated bearers or to return DRB IDs used for SN-terminated bearers that are not needed any longer.

Details of the procedure shown in Figure 8 are as follows:

1. The SN sends the SN Modification Required message including an SN RRC reconfiguration message, which may contain user plane resource configuration related context, other UE context related information and the new radio resource configuration of SCG. In case of change of security key, the PDCP Change Indication indicates that an SN security key update is required. In case the MN needs to perform PDCP data recovery, the PDCP Change Indication indicates that PDCP data recovery is required.
The SN can decide whether the change of security key is required.

2/3. The MN-initiated SN Modification procedure may be triggered by SN Modification Required message, e.g., when an SN security key change needs to be applied.
NOTE 3: For SN-terminated bearers to be setup for which PDCP duplication with CA is configured in NR MCG side, the SN allocates up to 4 separate Xn-U bearers and the MN provides a logical channel ID for primary or split secondary path to the SN via the nested MN-initiated SN modification procedure.

4. The MN sends the MN RRC reconfiguration message to the UE including the SN RRC reconfiguration message with the new SCG radio resource configuration.

5. The UE applies the new configuration and sends the MN RRC reconfiguration complete message, including an SN RRC response message, if needed. In case the UE is unable to comply with (part of) the configuration included in the MN RRC reconfiguration message, it performs the reconfiguration failure procedure.

6. Upon successful completion of the reconfiguration, the success of the procedure is indicated in the SN Modification Confirm message including the SN RRC response message, if received from the UE.

7. If instructed, the UE performs synchronisation towards the PSCell configured by the SN as described in SN Addition procedure. Otherwise, the UE may perform UL transmission directly after having applied the new configuration.

8. If PDCP termination point is changed for bearers using RLC AM, and when RRC full configuration is not used, the SN Status Transfer takes place between the MN and the SN.

9. If applicable, data forwarding between MN and the SN takes place.

10. The SN sends the Secondary RAT Data Usage Report message to the MN and includes the data volumes delivered to and received from the UE.
NOTE 4: The order the SN sends the Secondary RAT Data Usage Report message and performs data forwarding with MN is not defined. The SN may send the report when the transmission of the related QoS flow is stopped.

11. If applicable, a PDU Session path update procedure is performed.

Document WO 2019/031948 A1 discloses transmitting, by MN, a SN modification request message comprising the bearer type change from MN terminated Split bearer to a MN terminated bearer and SCG configuration information to the SN.

SUMMARY

In current 3GPP specifications, including the current versions of 3GPP TS 38.331, 3GPP TS 37.340, 3GPP TS 36.423, and 3GPP TS 38.42, it is not clear how to handle the case when the SN want to release only the SCG configuration, (i.e., meaning the PHY, MAC, RLC layers), while keeping SN-terminated Data Radio Bearers (DRB)s, by changing all the SN terminated Split or SCG DRB to SN-terminated MCG DRB. In such a case, there is currently no signaling that the SN can use to signal this to the MN. This is needed, since in the radio interface signaling towards the UE it is the MN that creates the RRC message that includes the field instructing the UE to release the SCG.
Note that the term "SCG release" as used herein refers to a different procedure than SN release, e.g., as described in 3GPP TS 37.340 clause 10.4. In SN release, the whole SN is released, i.e., meaning from the PHY to the PDCP layer, whereas in SCG release only the lower layers and RLC bearers of the SN are released, i.e., meaning only PHY, MAC, and RLC layers are released while the PDCP layer is kept.
Since there is no signaling supporting a SCG release procedure, it will be impossible for the MN or SN to initiate the SCG release when the MN or SN wants to. This will cause a degradation on the system performance or a long interruption delay.

Various embodiments of the techniques, apparatuses, and systems described herein enable an SN-initiated SCG release, where the SN asks the MN to release the SN lower layers, i.e., PHY, MAC, and RLC, including RLC bearers, and to change all the SN-terminated split or SCG DRBs into SN-terminated MCG DRBs. In various embodiments this may be accomplished as follows:

1. A flag is included in the inter-node RRC messages to notify the MN that the SCG should be released.
2. When triggering the SN-initiated SN modification, the SN includes a flag to notify the MN that this procedure is initiated for the purpose of releasing the SCG.
3. A new X2/Xn procedure is added for the case of the SN-initiated SCG release.

Example embodiments of the disclosed techniques include a method, performed by a first network node operating as a secondary node (SN) in dual-connectivity (DC) with a user equipment (UE). The method comprises sending, towards a second network node operating as a master node (MN) in dual-connectivity with the UE, an indication that a secondary cell group (SCG) configuration for the UE is to be released, wherein release of the SCG configuration involves release of PHY,MAC and RLC configuration for one or more SCG bearers or split bearers without a release of the corresponding PDCP configurations.

Other embodiments include a complementary method, implemented by a network node operating as a master node (MN) in dual-connectivity (DC) with a user equipment (UE). The method comprises receiving, from a second network node operating as a secondary node (SN) in dual-connectivity with the UE, an indication that a secondary cell group (SCG) configuration for the UE is to be released, wherein release of the SCG configuration involves release of PHY,MAC and RLC configuration for one or more SCG bearers or split bearers without a release of the corresponding PDCP configurations.

Variants of these methods, as well as corresponding apparatuses and systems, are described below. Using various embodiments of the disclosed techniques, the SN can trigger an SN-initiated SCG release by indicating to the MN that the SCG lower layers should be released and that the SN-terminated Split or SCG DRB should become an SN-terminated MCG DRB. This is not possible with the current standards.

BRIEF DESCRIPTION OF THE FIGURES

Figure 1 illustrates LTE and NR interworking options.

Figure 2 illustrates the control plane architecture for dual connectivity (DC) in LTE DC and EN-DC.

Figure 3 illustrates network-side protocol termination options for MCG, SCG, and split bearers in MR-DC with EPC (EN-DC).

Figure 4 illustrates the network architecture for the control plane, in EN-DC.

Figure 5 is a signaling flow chart illustrating an MN-initiated SN modification procedure, for EN-DC

Figure 6 is a signaling flow chart illustrating an SN-initiated SN modification procedure with MN involvement, for EN-DC.

Figure 7 is a signaling flow chart illustrating an MN-initiated SN modification procedure, for MR-DC with 5GC.

Figure 8 is a signaling flow chart illustrating an SN-initiated SN modification procedure with MN involvement, for MR-DC with 5GC.

Figure 9 illustrates an SN-initiated SCG release procedure, according to some of the presently disclosed embodiments.

Figure 10 is a flow diagram illustrating an exemplary method performed by a first network node, configured to act as a secondary node (SN) in dual connectivity (DC) with a user equipment (UE).

Figure 11 is a flow diagram illustrating an exemplary method performed by a first network node, configured to act as a master node (MN) in dual connectivity (DC) with a user equipment (UE).

Figure 12 illustrates an exemplary embodiment of a wireless network, in accordance with various aspects described herein.

Figure 13 illustrates an exemplary embodiment of a UE, in accordance with various aspects described herein.

Figure 14 is a block diagram illustrating an exemplary virtualization environment usable for implementation of various embodiments of network nodes described herein.

Figures 15-16 are block diagrams of various exemplary communication systems and/or networks, in accordance with various aspects described herein.

Figures 17, 18, 19, and 20 are flow diagrams illustrating various exemplary methods and/or procedures implemented in a communication system, according to various exemplary embodiments of the present disclosure.

DETAILED DESCRIPTION

Several of the detailed methods and embodiments described below are described in the context of NR but can be applied without any loss of meaning also to LTE. Further, what is described can be applied to any MR-DC options.

Again, the SCG release procedure described herein is fundamentally different from the SN release procedure already present in 3GPP TS 37.340 section 10.4. The main difference is that in the SN release procedure the whole SN is released (i.e., meaning the PHY, MAC, RLC, and PDCP layers are released), whereas with the SCG release procedures described herein only the lower layers of the SN are released and the PDCP layer is kept. Thus, references herein to an "SCG release" or an "SCG configuration release" refer to the release of the PHY, MAC, and RLC configuration for one or more SCG bearers or split bearers, without a release of the corresponding PDCP configuration(s).

In the present document, the term "bearer" is frequently used. This can correspond to a data radio bearer (DRB) or radio bearer (RB).

A first category of solution according to the presently disclosed techniques is a solution whereby a new indication is included inter-node RRC messages, i.e., the RRC messages exchanged between the MN and SN. Examples of these inter-node RRC messages are described in section 11.2 of 3GPP TS 38.331 (v16.3.1).

According to this approach, when the SN wants to indicate to the MN that the SCG should be released, the SN includes an indication in the inter-node RRC messages (e.g., in CG-Config). The indication may be just a single bit, e.g., with "0" to indicate that the SCG should not be released or "1" to indicate that the SCG should be released (or vice versa). Alternatively, a boolean type field could be used, where the value set to "true" indicates the release of the SCG and "false" not to release the SCG, or vice versa. Alternatively, the presence of the field may also indicate that the SCG should be released (regardless of its values).

In some embodiments, together with the indication that the SCG should be released, another indication may be included in the inter-node RRC messages to indicate to the MN that the SN-terminated Split or SCG bearer should be reconfigured to become an SN-terminated MCG bearer. This indication may be a simple bit with "0" associated with each bearer identity, e.g., DRB_ID, to indicate that the Split or SCG bearer should not become SN-terminated MCG bearer and with "1" to indicate that the Split or SCG bearer should now become SN-terminated MCG bearer (or vice versa). Alternatively, a boolean type field could be used, where the value set to "true" indicates the change of the bearer type and "false" not to change the bearer type, or vice versa.

A second category of solution according to the presently disclosed techniques is a solution whereby a new indication is included in the SN-initiated SN modification procedure.

According to this approach, the SN includes an indication, to indicate to the MN that the SCG should be released, in the SN-initiated SN modification procedure. The indication may be just a single bit with "0" to indicate that the SCG should not be released or "1" that the SCG should be released (or vice versa). Alternatively, a boolean type field could be used, where the value set to "true" indicates the release of the SCG and "false" not to release the SCG, or vice versa. Alternatively, the presence of the field may also indicate that the SCG should be released (regardless of its values). This indication is included in the X2 or Xn signalling.

In another embodiment, the SN may also include, together with the indication for the SCG release, a list of bearers that should be released when the SCG is released and/or a list of bearers that should be changed from SN-terminated Split or SCG bearers to SN-terminated MCG bearers. Alternatively, the SN may just include an indication (e.g., a bit) to indicate that all the bearers should be either released of changed from SN-terminated Split or SCG bearers to SN-terminated MCG bearers.

A third category of solution according to the presently disclosed techniques is a solution whereby a new X2/Xn procedure is created for the SN-initiated SCG release case.

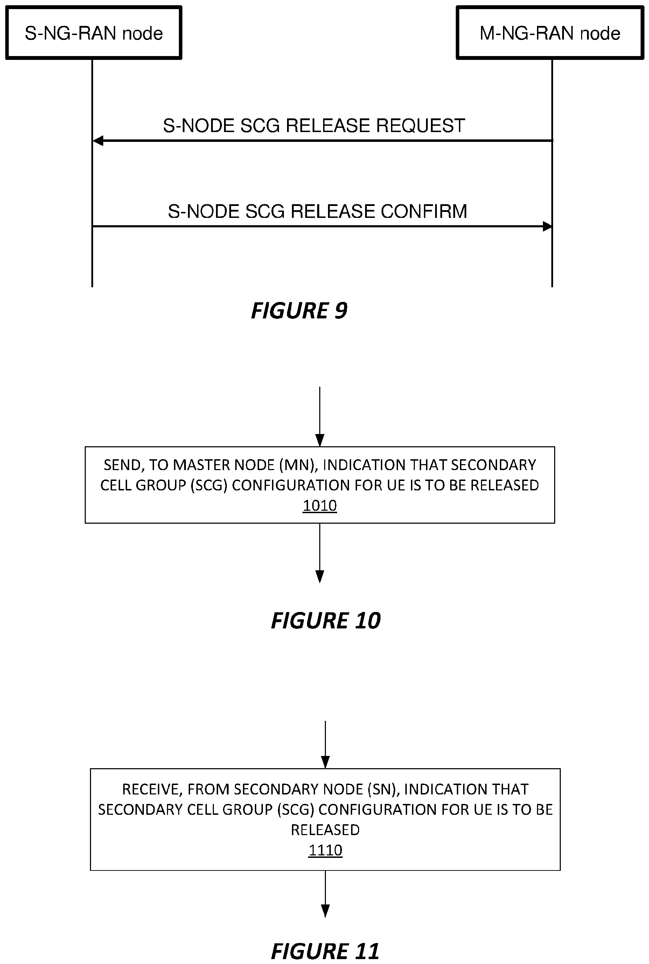

According to this approach, a new X2/Xn procedure is created for the case where the SN wants to notify the MN that the SCG shall be released. In this case, this same procedure may also include the bearers that should be released and/or changed from SN-terminated Split or SCG bearers to SN-terminated MCG bearers. This procedure is illustrated in Figure 9. In this procedure, which can be referred to as an SN-initiated SCG release procedure, the SN sends to the MN a message, e.g., an S-NODE SCG RELEASE REQUIRED message, to inform the MN that the SCG should be released. The MN replies with an S-NODE SCG RELEASE CONFIRM message to acknowledge the SN that the SCG had been correctly released. In the S-NODE SCG RELEASE REQUIRED message the SN may also include the bearers to be released and/or changed from SN-terminated SCG bearers to SN-terminated MCG bearers. This procedure might be added to 3GPP TS 38.423, for example.

Implementations of the first solution

As noted above, a first category of solution includes those in which an indication regarding SCG release is included in inter-node RRC messages, e.g., like those described in 3GPP TS 38.331.

Section 11.2.2 of 3GPP TS 38.331 may be modified to read as follows, where the modified portions are shown in bold italics:

---------------------------- begin proposed 3GPP excerpt ----------------------------------------

11.2.2 Message definitions

- CG-Config

This message is used to transfer the SCG radio configuration as generated by the SgNB or SeNB. It can also be used by a CU to request a DU to perform certain actions, e.g. to request the DU to perform a new lower layer configuration.

Direction: Secondary gNB or eNB to master gNB or eNB, alternatively CU to DU.

*CG-Config* **message**

```
-- ASN1START
-- TAG-CG-CONFIG-START

CG-Config ::=                        SEQUENCE {
    criticalExtensions                      CHOICE {
        c1                                      CHOICE{
            cg-Config                               CG-Config-IEs,
            spare3 NULL, spare2 NULL, spare1 NULL
        },
        criticalExtensionsFuture            SEQUENCE {}
    }
}

CG-Config-IEs ::=                    SEQUENCE {
    scg-CellGroupConfig                 OCTET STRING (CONTAINING
RRCReconfiguration)      OPTIONAL,
    scg-RB-Config                       OCTET STRING (CONTAINING
RadioBearerConfig)      OPTIONAL,
    configRestrictModReq                ConfigRestrictModReqSCG
OPTIONAL,
    drx-InfoSCG                         DRX-Info
OPTIONAL,
    candidateCellInfoListSN             OCTET STRING (CONTAINING
MeasResultList2NR)      OPTIONAL,
    measConfigSN                        MeasConfigSN
OPTIONAL,
```

```
        selectedBandCombination            BandCombinationInfoSN
    OPTIONAL,
        fr-InfoListSCG                     FR-InfoList
    OPTIONAL,
        candidateServingFreqListNR         CandidateServingFreqListNR
    OPTIONAL,
        nonCriticalExtension               CG-Config-v1540-IEs
    OPTIONAL
    }

    CG-Config-v1540-IEs ::=            SEQUENCE {
        pSCellFrequency                    ARFCN-ValueNR
    OPTIONAL,
        reportCGI-RequestNR                SEQUENCE {
            requestedCellInfo                  SEQUENCE {
                ssbFrequency                       ARFCN-ValueNR,
                cellForWhichToReportCGI            PhysCellId
            }
    OPTIONAL
        }
    OPTIONAL,
        ph-InfoSCG                         PH-TypeListSCG
    OPTIONAL,
        nonCriticalExtension               CG-Config-v1560-IEs
    OPTIONAL
    }

    CG-Config-v1560-IEs ::=            SEQUENCE {
        pSCellFrequencyEUTRA               ARFCN-ValueEUTRA
    OPTIONAL,
        scg-CellGroupConfigEUTRA           OCTET STRING
    OPTIONAL,
        candidateCellInfoListSN-EUTRA      OCTET STRING
    OPTIONAL,
        candidateServingFreqListEUTRA      CandidateServingFreqListEUTRA
    OPTIONAL,
        needForGaps                        ENUMERATED {true}
    OPTIONAL,
        drx-ConfigSCG                      DRX-Config
    OPTIONAL,
        reportCGI-RequestEUTRA             SEQUENCE {
            requestedCellInfoEUTRA             SEQUENCE {
                eutraFrequency                         ARFCN-ValueEUTRA,
                cellForWhichToReportCGI-EUTRA          EUTRA-PhysCellId
            }
    OPTIONAL
        }
    OPTIONAL,
        nonCriticalExtension               CG-Config-v1590-IEs
    OPTIONAL
    }

    CG-Config-v1590-IEs ::=            SEQUENCE {
        scellFrequenciesSN-NR              SEQUENCE (SIZE (1..
    maxNrofServingCells-1)) OF  ARFCN-ValueNR          OPTIONAL,
        scellFrequenciesSN-EUTRA          SEQUENCE (SIZE (1..
    maxNrofServingCells-1)) OF  ARFCN-ValueEUTRA       OPTIONAL,
        nonCriticalExtension               CG-Config-v1610-IEs
    OPTIONAL
    }
```

```
CG-Config-v1610-IEs ::=                 SEQUENCE {
    drx-InfoSCG2                            DRX-Info2
OPTIONAL,
    nonCriticalExtension                    CG-Config-v1620-IEs
OPTIONAL
}


CG-Config-v1620-IEs ::=                 SEQUENCE {
    ueAssistanceInformationSCG-r16          OCTET STRING (CONTAINING
UEAssistanceInformation)  OPTIONAL,
    nonCriticalExtension                    CG-Config-v1630-IEs
OPTIONAL
}


CG-Config-v1630-IEs ::=                 SEQUENCE {
    selectedToffset-r16                     T-Offset-r16
OPTIONAL,
    nonCriticalExtension                    SEQUENCE {}
OPTIONAL
}

PH-TypeListSCG ::=                      SEQUENCE (SIZE
(1..maxNrofServingCells)) OF PH-InfoSCG


PH-InfoSCG ::=                          SEQUENCE {
    servCellIndex                           ServCellIndex,
    ph-Uplink                               PH-UplinkCarrierSCG,
    ph-SupplementaryUplink                  PH-UplinkCarrierSCG
OPTIONAL,
    ...
}


PH-UplinkCarrierSCG ::=                 SEQUENCE{
    ph-Type1or3                             ENUMERATED {type1, type3},
    ...
}

MeasConfigSN ::=                        SEQUENCE {
    measuredFrequenciesSN                   SEQUENCE (SIZE (1..maxMeasFreqsSN))
OF NR-FreqInfo  OPTIONAL,
    ...
}

NR-FreqInfo ::=                         SEQUENCE {
    measuredFrequency                       ARFCN-ValueNR
OPTIONAL,
    ...
}

ConfigRestrictModReqSCG ::=            SEQUENCE {
    requestedBC-MRDC                        BandCombinationInfoSN
OPTIONAL,
    requestedP-MaxFR1                       P-Max
OPTIONAL,
    ...,
    [[
    requestedPDCCH-BlindDetectionSCG        INTEGER (1..15)
OPTIONAL,
    requestedP-MaxEUTRA                     P-Max
OPTIONAL
    ]],
```

```
    [[
    requestedP-MaxFR2-r16                P-Max
OPTIONAL,
    requestedMaxInterFreqMeasIdSCG-r16   INTEGER(1..maxMeasIdentitiesMN)
OPTIONAL,
    requestedMaxIntraFreqMeasIdSCG-r16   INTEGER(1..maxMeasIdentitiesMN)
OPTIONAL,
    requestedToffset-r16                 T-Offset-r16
OPTIONAL
    ]],
    [[
    scg-Release                                  SCG-Release      OPTIONAL,
    ]]
}

BandCombinationIndex ::= INTEGER (1..maxBandComb)

BandCombinationInfoSN ::=              SEQUENCE {
    bandCombinationIndex                   BandCombinationIndex,
    requestedFeatureSets                   FeatureSetEntryIndex
}

FR-InfoList ::= SEQUENCE (SIZE (1..maxNrofServingCells-1)) OF FR-Info

FR-Info ::= SEQUENCE {
    servCellIndex       ServCellIndex,
    fr-Type             ENUMERATED {fr1, fr2}
}

CandidateServingFreqListNR ::= SEQUENCE (SIZE (1.. maxFreqIDC-MRDC)) OF
ARFCN-ValueNR

CandidateServingFreqListEUTRA ::= SEQUENCE (SIZE (1.. maxFreqIDC-MRDC)) OF
ARFCN-ValueEUTRA

T-Offset-r16 ::= ENUMERATED {ms0dot5, ms0dot75, ms1, ms1dot5, ms2, ms2dot5,
ms3, spare1}

SCG-Release ::= SEQUENCE {
    scgRelease                  ENUMERATED {true},
    scgReleaseDRBs              ENUMERATED {true}    OPTIONAL
}


-- TAG-CG-CONFIG-STOP
-- ASN1STOP
```

| CG-Config field descriptions |
| --- |
| **candidateCellInfoListSN**<br>Contains information regarding cells that the source secondary node suggests<br>the target secondary gNB to consider configuring. |
| **candidateCellInfoListSN-EUTRA**<br>Includes the MeasResultList3EUTRA as specified in TS 36.331 [10]. Contains<br>information regarding cells that the source secondary node suggests the target<br>secondary eNB to consider configuring. This field is only used in NE-DC. |
| **candidateServingFreqListNR, candidateServingFreqListEUTRA** |

(continued)

| **CG-Config field descriptions** |
|---|
| Indicates frequencies of candidate serving cells for In-Device Co-existence Indication (see TS 36.331 [10]). |
| **configRestrictModReq** |
| Used by SN to request changes to SCG configuration restrictions previously set by MN to ensure UE capabilities are respected. E.g. can be used to request configuring an NR band combination whose use MN has previously forbidden. |
| **drx-ConfigSCG** |
| This field contains the complete DRX configuration of the SCG. This field is only used in NR-DC. |
| **drx-InfoSCG** |
| This field contains the DRX long and short cycle configuration of the SCG. This field is used in (NG)EN-DC and NE-DC. |
| **drx-InfoSCG2** |
| This field contains the drx-onDurationTimer configuration of the SCG. This field is only used in (NG)EN-DC. |
| **fr-InfoListSCG** |
| Contains information of FR information of serving cells that include PScell and SCells configured in SCG. |
| **measuredFrequenciesSN** |
| Used by SN to indicate a list of frequencies measured by the UE. |
| **needForGaps** |
| In NE-DC, indicates wheter the SN requests gNB to configure measurements gaps. |
| **ph-InfoSCG** |
| Power headroom information in SCG that is needed in the reception of PHR MAC CE of MCG |
| **ph-SupplementaryUplink** |
| Power headroom information for supplementary uplink. In the case of (NG)EN-DC and NR-DC, this field is only present when two UL carriers are configued for a serving cell and one UL carrier reports type1 PH while the other reports type 3 PH. |
| **ph-Type1or3** |
| Type of power headroom for a certain serving cell in SCG (PSCell and activated SCells). Value type1 refers to type 1 power headroom, value type3 refers to type 3 power headroom. (See TS 38.321 [3]). |
| **ph-Uplink** |
| Power headroom information for uplink. |
| **pSCellFrequency, pSCellFrequencyEUTRA** |
| Indicates the frequency of PSCell in NR (i.e., pSCellFrequency) or E-UTRA (i.e., pSCellFrequencyEUTRA). In this version of the specification, pSCellFrequency is not used in NE-DC whereas pSCellFrequencyEUTRA is only used in NE-DC. |
| **reportCGI-RequestNR, reportCGI-RequestEUTRA** |
| Used by SN to indicate to MN about configuring reportCGI procedure. The request may optionally contain information about the cell for which SN intends to configure reportCGI procedure. In this version of the specification, the reportCGI-RequestNR is used in (NG)EN-DC and NR-DC whereas reportCGI-RequestEUTRA is used only for NE-DC. |

(continued)

| CG-Config field descriptions |
|---|
| **requestedBC-MRDC**<br>Used to request configuring a band combination and corresponding feature sets which are forbidden to use by MN (i.e. outside of the allowedBC-ListMRDC) to allow re-negotiation of the UE capabilities for SCG configuration. |
| **requestedMaxInterFreqMeasIdSCG**<br>Used to request the maximum number of allowed measurement identities to configure for inter-frequency measurement. This field is only used in NR-DC. |
| **requestedMaxIntrafreqMeaIdSCG**<br>Used to request the maximum number of allowed measurement identities to configure for intra-frequency measurement on each serving frequency. |
| **requestedPDCCH-BlindDetectionSCG**<br>Requested value of the reference number of cells for PDCCH blind detection allowed to be configured for the SCG. |
| **requestedP-MaxEUTRA**<br>Requested value for the maximum power for the serving cells the UE can use in E-UTRA SCG. This field is only used in NE-DC. |
| **requestedP-MaxFR1**<br>Requested value for the maximum power for the serving cells on frequency range 1 (FR1) in this secondary cell group (see TS 38.104 [12]) the UE can use in NR SCG. |
| **requestedP-MaxFR2**<br>Requested value for the maximum power for the serving cells on frequency range 2 (FR2) in this secondary cell group the UE can use in NR SCG. This field is only used in NR-DC. |
| **requestedToffset**<br>Requests the new value for the time offset restriction used by the SN for scheduling SCG transmissions (i.e. $T^{max}_{proc,SCG}$, see TS 38.213 [13]). This field is used in NR-DC only when the fields nrdc-PC-mode-FR1-r16 or nrdc-PC-mode-FR2-r16 are set to dynamic. Value ms0dot5 corresponds to 0.5 ms, value ms0dot75 corresponds to 0.75 ms, value ms1 corresponds to 1ms and so on. |
| **scellFrequenciesSN-EUTRA, scellFrequenciesSN-NR**<br>Indicates the frequency of all SCells configured in SCG. The field scellFrequenciesSN-EUTRA is used in NE-DC; the field scellFrequenciesSN-NR is used in (NG)EN-DC and NR-DC. In (NG)EN-DC, the field is optionally provided to the MN. |
| **scg-CellGroupConfig**<br>Contains the RRCReconfiguration message (containing only secondaryCellGroup and/or measConfig and/or otherConfig and/or conditionalReconfiguration and/or bap-Config and/or iab-IP-AddressConfigurationList):<br>- to be sent to the UE, used upon SCG establishment or modification, as generated (entirely) by the (target) SgNB. In this case, the SN sets the RRCReconfiguration message in accordance with clause 6 e.g. regarding the "Need" or "Cond" statements.<br>or<br>- including the current SCG configuration of the UE, when provided in response to a query from MN, or in SN triggered SN change in order to enable delta signaling by the target SN. In this case, the SN sets the RRCReconfiguration message in accordance with clause 11.2.3.<br>The field is absent if neither SCG (re)configuration nor SCG configuration query nor SN triggered SN change is performed, e.g. at inter-node capability/configuration coordination which does not result in SCG (re)confiquration towards the UE. This field is not applicable in NE-DC. |

(continued)

| CG-Config field descriptions |
|---|
| **scg-CellGroupConfigEUTRA**<br>Includes the E-UTRA RRCConnectionReconfiguration message as specified in TS 36.331 [10]. In this version of the specification, the E-UTRA RRC message can only include the field scg-Configuration:<br><br>- to be sent to the UE, used to (re-) configure the SCG configuration upon SCG establishment or modification, as generated (entirely) by the (target) SeNB. In this case, the SN sets the scg-Configuration within the EUTRA RRCConnectionReconfiguration message in accordance with clause 6 in TS 36.331 [10] e.g. regarding the "Need" or "Cond" statements.<br>or<br>- including the current SCG configuration of the UE, when provided in response to a query from MN, or in SN triggered SN change in order to enable delta signalling by the target SN.<br><br>The field is absent if neither SCG (re)configuration nor SCG configuration query nor SN triggered SN change is performed, e.g. at inter-node capability/configuration coordination which does not result in SCG (re)configuration towards the UE. This field is only used in NE-DC. |
| **scg-RB-Config**<br>Contains the IE RadioBearerConfig:<br>- to be sent to the UE, used to (re-)configure the SCG RB configuration upon SCG establishment or modification, as generated (entirely) by the (target) SgNB or SeNB. In this case, the SN sets the RadioBearerConfig in accordance with clause 6, e.g. regarding the "Need" or "Cond" statements.<br>or<br>- including the current SCG RB configuration of the UE, when provided in response to a query from MN or in SN triggered SN change or in SN triggered SN release or bearer type change between SN terminated bearer to MN terminated bearer in order to enable delta signaling by the MN or target SN. In this case, the SN sets the RadioBearerConfig in accordance with clause 11.2.3.<br>The field is absent if neither SCG (re)configuration nor SCG configuration query nor SN triggered SN change nor SN triggered SN release is performed, e.g. at inter-node capability/configuration coordination which does not result in SCG RB (re)configuration. |
| ***scgRelease***<br>***This field is used to indicate whether the SCG should be released.*** |
| ***scgReleaseDRBs***<br>***This field is used to indicate whether the SN terminated SCG DRBs should be released when the SCG is released. If the field is present, all the SN terminated SCG DRBs should be released. Otherwise, all the SN terminated SCG DRBs should be changed to SN terminated MCG bearer. The field may be used only when the field scgRelease is present.*** |
| **selectedBandCombination**<br>Indicates the band combination selected by SN in (NG)EN-DC, NE-DC, and NR-DC. The SN should inform the MN with this field whenever the band combination and/or feature set it selected for the SCG changes (i.e. even if the new selection concerns a band combination and/or feature set that is allowed by the allowedBC-ListMRDC) |
| **selectedToffset** |

(continued)

| CG-Config field descriptions |
| --- |
| Indicates the value used by the SN for scheduling SCG transmissions (i.e. $T^{max}_{proc,SCG}$, see TS 38.213 [13]). This field is used in NR-DC only when the fields nrdc-PC-mode-FR1-r16 or nrdc-PC-mode-FR2-r16 are set to dynamic. The SN can only indicate a value that is less than or equal to maxToffset received from MN. This |
| field is used in NR-DC only when MN has included the field maxToffset in CG-ConfigInfo. Value ms0dot5 corresponds to 0.5 ms, value ms0dot75 corresponds to 0.75 ms, value ms1 corresponds to 1ms and so on. |
| **ueAssistanceInformationSCG**<br>Includes for each UE assistance feature associated with the SCG, the information last reported by the UE in the NR UEAssistanceInformation message for the SCG, if any. |
| |
| **BandCombinationInfoSN field descriptions** |
| **bandCombinationIndex**<br>In case of NR-DC, this field indicates the position of a band combination in the supportedBandCombinationList. In case of NE-DC, this field indicates the position of a band combination in the supportedBandCombinationList and/or supportedBandCombinationListNEDC-Only. In case of (NG)EN-DC, this field indicates the position of a band combination in the supportedBandCombinationList and/or supportedBandCombinationList-UplinkTxSwitch. Band combination entries in supportedBandCombinationList are referred by an index which corresponds to the position of a band combination in the supportedBandCombinationList. Band combination entries in supportedBandCombinationListNEDC-Only are referred by an index which corresponds to the position of a band combination in the supportedBandCombinationListNEDC-Only increased by the number of entries in supportedBandCombinationList. Band combination entries in supportedBandCombinationList-UplinkTxSwitch are referred by an index which corresponds to the position of a band combination in the supportedBandCombinationList-UplinkTxSwitch increased by the number of entries in supportedBandCombinationList. |
| **requestedFeatureSets**<br>The position in the FeatureSetCombination which identifies one FeatureSetUplink/Downlink for each band entry in the associated band combination |

-------------------------------- end proposed 3GPP excerpt -------------------------------------------

Implementations of the second solution

As noted above, a second category of solution includes those in which an indication regarding SCG release is included in an SN-initiated SN modification procedure, e.g., as described in 3GPP TS 38.423.

Section 9.1.2.8 of 3GPP TS 38.423 may be modified to read as follows, where the modified portions are shown in bold italics:

----------------------------- begin proposed 3GPP excerpt ------------------------------------------

9.1.2.8 S-NODE MODIFICATION REQUIRED

This message is sent by the S-NG-RAN node to the M-NG-RAN node to request the modification of S-NG-RAN node resources for a specific UE.

Direction: S-NG-RAN node -> M-NG-RAN node.

| IE/Group Name | Presence | Range | IE type and reference | Semantics description | Criticality | Assigned Criticality |
|---|---|---|---|---|---|---|
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | reject |
| S-NG-RAN node UE XnAP ID | M | | NG-RAN node UE XnAP ID 9.2.3.16 | Allocated at the S-NG-RAN node | YES | reject |
| Cause | M | | 9.2.3.2 | | YES | ignore |
| PDCP Change Indication | O | | 9.2.3.74 | | YES | ignore |
| PDU Session Resources To Be Modified List | | 0..1 | | | YES | ignore |
| >PDU Session Resources To Be Modified Item | | 1 .. <maxnoofPDUSessions> | | NOTE: If neither the *PDU Session Resource Modification Required Info - SN terminated* IE nor the *PDU Session Resource Modification Required Info - MN terminated* IE is present in a *PDU Session Resources To Be Modified Item* IE, abnormal conditions as specified in clause 8.3.4.4 apply. | - | |
| >>PDU Session ID | M | | 9.2.3.18 | | - | |
| >>PDU Session Resource Modification Required Info - SN terminated | O | | 9.2.1.20 | | - | |

18

| IE/Group Name | Presence | Range | IE type and reference | Semantics description | Criticality | Assigned Criticality |
|---|---|---|---|---|---|---|
| >>PDU Session Resource Modificatio n Required Info - MN terminated | O | | 9.2.1.22 | | - | |
| **PDU Session Resources To Be Released List** | | 0..1 | | | YES | ignore |
| **>PDU Session Resources** | | 1 .. <maxnoofPDUSessions> | | | - | |
| **To Be Released Item** | | | | | | |
| >PDU sessions to be released List - SN terminated | O | | PDU session List with data forwarding request info 9.2.1.24 | | - | |
| >PDU sessions to be released List - MN terminated | O | | PDU session List with Cause 9.2.1.26 | | - | |
| S-NG-RAN node to M-NG-RAN node Container | O | | OCTET STRING | Includes the *CG-Config* message as defined in subclause 11.2.2 of TS 38.331 [10]. | YES | ignore |
| Spare DRB IDs | O | | DRB List 9.2.1.29 | Indicates the list of unnecessary DRB IDs that had been used by the S-NG-RAN node. | YES | ignore |
| Required Number of DRB IDs | O | | Number of DRBs 9.2.3.78 | Indicates the number of DRB IDs that the S-NG-RAN node requests more. | YES | ignore |
| Location Information at S-NODE | O | | Target Cell Global ID 9.2.3.25 | Contains information to support localisation of the UE | YES | ignore |

(continued)

| IE/Group Name | Presence | Range | IE type and reference | Semantics description | Criticality | Assigned Criticality |
|---|---|---|---|---|---|---|
| MR-DC Resource Coordination Information | O | | 9.2.2.33 | Information used to coordinate resource utilisation between M-NG-RAN node and S-NG-RAN node. | YES | Ignore |
| RRC Config Indication | O | | 9.2.3.72 | | YES | reject |
| *SCG to be released* | *O* | | | | *YES* | *ignore* |
| *> SCG Release* | | | | *Indicates whether the SCG should be released.* | | |
| *> DRBs to be released* | | | | *Indicates the list of DRB IDs that need to be released when the SCG is released.* | | |
| *> DRBs to be changed to MCG bearer* | | | | *Indicates the list of DRB IDs that need to be changed from SN terminated SCG bearer to SN terminated SCG bearer.* | | |

| Range bound | Explanation |
|---|---|
| maxnoofPDUSessions | Maximum no. of PDU sessions. Value is 256 |

-------------------------------- end proposed 3GPP excerpt --------------------------------------------

A variant of this approach is including an indication in the SN-initiated SN release procedure, e.g., as documented in section 9.1.2.17 of 3GPP TS 38.423.

According to this approach, section 9.1.2.17 of 3GPP TS 38.423 may be modified to read as follows, where the modified portions are shown in bold italics:

----------------------------- begin proposed 3GPP excerpt --------------------------------------

9.1.2.17 S-NODE RELEASE REQUIRED

This message is sent by the S-NG-RAN node to request the release of all resources for a specific UE at the S-NG-RAN node.

Direction: S-NG-RAN node -> M-NG-RAN node.

| IE/Group Name | Presence | Range | IE type and reference | Semantics description | Criticality | Assigned Criticality |
|---|---|---|---|---|---|---|
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | reject |
| S-NG-RAN node UE XnAP ID | M | | NG-RAN node UE XnAP ID 9.2.3.16 | Allocated at the S-NG-RAN node | YES | reject |
| **PDU sessions To Be Released** | | *0..1* | | | YES | ignore |
| >PDU Session Resources to be released List - SN terminated | O | | PDU session List with data forwarding request info 9.2.1.24 | | - | |
| Cause | M | | 9.2.3.2 | | YES | ignore |
| S-NG-RAN node to M-NG-RAN node Container | O | | OCTET STRING | Includes the CG-Config message as defined in TS 38.331 [10]. | YES | ignore |
| *SCG to be released* | *O* | | | | *YES* | *ignore* |
| *> SCG Release* | | | | *Indicates whether the SCG should be released.* | | |
| *> DRBs to be released* | *O* | | | *Indicates the list of DRB IDs that need to be released when the SCG is released.* | | |

(continued)

| IE/Group Name | Presence | Range | IE type and reference | Semantics description | Criticality | Assigned Criticality |
|---|---|---|---|---|---|---|
| > *DRBs to be changed to MCG bearer* | *O* | | | *Indicates the list of DRB IDs that need to be changed from SN terminated SCG bearer to SN terminated SCG bearer.* | | |

---------------------- end proposed 3GPP excerpt ---------------------------------------------

In view of the detailed examples described above, it will be appreciated that Figure 10 illustrates an example method, as might be performed by a first network node operating as a secondary node (SN) in dual-connectivity (DC) with a user equipment (UE). As shown at block 1010, the method comprises the step of sending, towards a second network node operating as a master node (MN) in dual-connectivity with the UE, an indication that a secondary cell group (SCG) configuration for the UE is to be released.

In some embodiments of the illustrated method, sending the indication comprises including the indication in an inter-node Radio Resource Control (RRC) message sent to the MN. Examples of this approach were discussed above, and described as the "first solution." In some of these embodiments, the method comprises sending to the MN an indication that a SN-terminated split bearer or SN-terminated SCG bearer corresponding to the SCG configuration is to be reconfigured to an SN-terminated Master Control Group (MCG) bearer.

In other embodiments of the illustrated method, sending the indication comprises including the indication in an SN-initiated modification procedure. Examples of this were described above as the "second solution." In some of these embodiments, the method may comprise sending to the MN a list of one or more SN-terminated split bearers and/or SN-terminated SCG bearers corresponding to the SCG configuration that are to be reconfigured to SN-terminated Master Control Group (MCG) bearers. In some of these and in some others, the method may comprise sending to the MN a list of one or more SN-terminated split bearers and/or SN-terminated SCG bearers corresponding to the SCG configuration that are to be released.

In other embodiments according to this second solution, the method may further comprise sending to the MN an indication that all SN-terminated split bearers and SN-terminated SCG bearers corresponding to the SCG configuration are to be reconfigured to SN-terminated Master Control Group (MCG) bearers. In still others, the method may further comprise sending to the MN an indication that all SN-terminated split bearers and SN-terminated SCG bearers corresponding to the SCG configuration are to be released.

In other embodiments of the method illustrated in Figure 10, the method may comprise sending an SCG release request message to the MN, where the SCG release request message includes the indication. Examples of this were described above as the "first solution." In some of these embodiments, the method may further comprise receiving an SCG release confirmation message from the MN, in response to the SCG release request message.

In some embodiments according to this third solution, the SCG release request message may include a list of one or more SN-terminated split bearers and/or SN-terminated SCG bearers corresponding to the SCG configuration that are to be reconfigured to SN-terminated Master Control Group (MCG) bearers. In some of these and in other embodiments, the SCG release request message may include a list of one or more SN-terminated split bearers and/or SN-terminated SCG bearers corresponding to the SCG configuration that are to be released.

In other embodiments according to this third solution, the SCG release request message may include an indication that all SN-terminated split bearers and SN-terminated SCG bearers corresponding to the SCG configuration are to be reconfigured to SN-terminated Master Control Group (MCG) bearers. In still others, the SCG release request message may include an indication that all SN-terminated split bearers and SN-terminated SCG bearers corresponding to the SCG configuration are to be released.

Figure 11 illustrates an example method as might be performed by a first network node operating as a master node (MN) in dual-connectivity (DC) with a user equipment (UE). As shown at block 1110 of the figure, the method comprises the step of receiving, from a second network node operating as a secondary node (SN) in dual-connectivity with the UE, an indication that a secondary cell group (SCG) configuration for the UE is to be released.

In some embodiments of the illustrated method, the first network node, in response to the indication, reconfigures at least one SN-terminated SCG bearer for the UE to a MN-terminated MCG bearer.

In some embodiments, receiving the indication comprises receiving the indication in an inter-node Radio Resource Control (RRC) message received by the first network node. Some embodiments of this approach may comprise receiving, from the SN, an indication that a SN-terminated split bearer or SN-terminated SCG bearer corresponding to the SCG configuration is to be reconfigured to an SN-terminated Master Control Group (MCG) bearer.

In other embodiments, receiving the indication may comprise receiving the indication in SN-initiated modification procedure. In some of these embodiments, the method may comprise receiving, from the SN, a list of one or more SN-terminated split bearers and/or SN-terminated SCG bearers corresponding to the SCG configuration that are to be reconfigured to SN-terminated Master Control Group (MCG) bearers. In some of these and in other embodiments, the method may comprise receiving, from the SN, a list of one or more SN-terminated split bearers and/or SN-terminated SCG bearers corresponding to the SCG configuration that are to be released.

In other embodiments of the approach involving the SN-initiated modification procedure, the method may comprise receiving, from the SN, an indication that all SN-terminated split bearers and SN-terminated SCG bearers corresponding to the SCG configuration are to be reconfigured to SN-terminated Master Control Group (MCG) bearers. In still others, the method may comprise receiving, from the SN, an indication that all SN-terminated split bearers and SN-terminated SCG bearers corresponding to the SCG configuration are to be released.

In other embodiments of method shown in Figure 11, the first network node may receive, from the SN, an SCG release request message, the SCG release request message including the indication. In some of these embodiments, the method may further comprise sending an SCG release confirmation message to the SN, in response to the SCG release request message. In some of these and in other embodiments according to this third solution, the SCG release request message may include a list of one or more SN-terminated split bearers and/or SN-terminated SCG bearers corresponding to the SCG configuration that are to be reconfigured to SN-terminated Master Control Group (MCG) bearers. In some of these and in other embodiments, the SCG release request message may include a list of one or more SN-terminated split bearers and/or SN-terminated SCG bearers corresponding to the SCG configuration that are to be released. In others, the SCG release request message may instead include an indication that all SN-terminated split bearers and SN-terminated SCG bearers corresponding to the SCG configuration are to be reconfigured to SN-terminated Master Control Group (MCG) bearers, or an indication that all SN-terminated split bearers and SN-terminated SCG bearers corresponding to the SCG configuration are to be released.

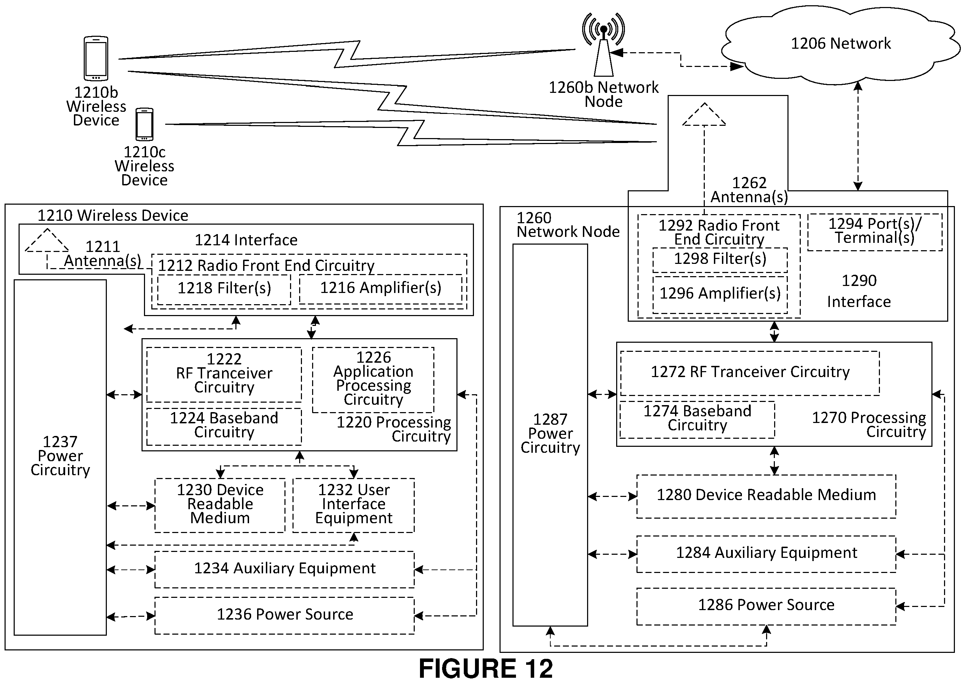

Although the subject matter described herein can be implemented in any appropriate type of system using any suitable components, the embodiments disclosed herein are described in relation to a wireless network, such as the example wireless network illustrated in Figure 12. For simplicity, the wireless network of Figure 12 only depicts network 1206, network nodes 1260 and 1260b, and WDs 1210, 1210b, and 1210c. In practice, a wireless network can further include any additional elements suitable to support communication between wireless devices or between a wireless device and another communication device, such as a landline telephone, a service provider, or any other network node or end device. Of the illustrated components, network node 1260 and wireless device (WD) 1210 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1206 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1260 and WD 1210 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes include, but are not limited to, access points (APs) (e.g., radio access points) and base stations (BS, e.g., radio base stations, NBs, eNBs, and gNBs). Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

Further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node can be a virtual network node as described in more detail below.

In Figure 12, network node 1260 includes processing circuitry 1270, device readable medium 1280, interface 1290, auxiliary equipment 1284, power source 1286, power circuitry 1287, and antenna 1262. Although network node 1260 illustrated in the example wireless network of Figure 12 can represent a device that includes the illustrated combination of hardware components, other embodiments can comprise network nodes with different combinations of components. It is to be understood that a network node comprises any suitable combination of hardware and/or software needed to perform the tasks, features, functions and methods and/or procedures disclosed herein. Moreover, while the components of network node 1260 are depicted as single boxes located within a larger box, or nested within multiple boxes, in practice, a network node can comprise multiple different physical components that make up a single illustrated component (e.g., device readable medium 1280 can comprise multiple separate hard drives as well as multiple RAM modules).

Similarly, network node 1260 can be composed of multiple physically separate components (e.g., a NodeB component and a RNC component, or a BTS component and a BSC component, etc.), which can each have their own respective components. In certain scenarios in which network node 1260 comprises multiple separate components (e.g., BTS and BSC components), one or more of the separate components can be shared among several network nodes. For example, a single RNC can control multiple NodeB's. In such a scenario, each unique NodeB and RNC pair, can in some instances be considered a single separate network node. In some embodiments, network node 1260 can be configured to support multiple radio access technologies (RATs). In such embodiments, some components can be duplicated (e.g., separate device readable medium 1280 for the different RATs) and some components can be reused (e.g., the same antenna 1262 can be shared by the RATs). Network node 1260 can also include multiple sets of the various illustrated components for different wireless technologies integrated into network node 1260, such as, for example, GSM, WCDMA, LTE, NR, WiFi, or Bluetooth wireless technologies. These wireless technologies can be integrated into the same or different chip or set of chips and other components within network node 1260.

Processing circuitry 1270 can be configured to perform any determining, calculating, or similar operations (e.g., certain obtaining operations) described herein as being provided by a network node. These operations performed by processing circuitry 1270 can include processing information obtained by processing circuitry 1270 by, for example, converting the obtained information into other information, comparing the obtained information or converted information to information stored in the network node, and/or performing one or more operations based on the obtained information or converted information, and as a result of said processing making a determination.

Processing circuitry 1270 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1260 components, such as device readable medium 1280, network node 1260 functionality. For example, processing circuitry 1270 can execute instructions stored in device readable medium 1280 or in memory within processing circuitry 1270. Such functionality can include providing any of the various wireless features, functions, or benefits discussed herein. In some embodiments, processing circuitry 1270 can include a system on a chip (SOC).

In some embodiments, processing circuitry 1270 can include one or more of radio frequency (RF) transceiver circuitry 1272 and baseband processing circuitry 1274. In some embodiments, radio frequency (RF) transceiver circuitry 1272 and baseband processing circuitry 1274 can be on separate chips (or sets of chips), boards, or units, such as radio units and digital units. In alternative embodiments, part or all of RF transceiver circuitry 1272 and baseband processing circuitry 1274 can be on the same chip or set of chips, boards, or units.

In certain embodiments, some or all of the functionality described herein as being provided by a network node, base station, eNB or other such network device can be performed by processing circuitry 1270 executing instructions stored on device readable medium 1280 or memory within processing circuitry 1270. In alternative embodiments, some or all of the functionality can be provided by processing circuitry 1270 without executing instructions stored on a separate or discrete device readable medium, such as in a hard-wired manner. In any of those embodiments, whether executing instructions stored on a device readable storage medium or not, processing circuitry 1270 can be configured to perform the described functionality. The benefits provided by such functionality are not limited to processing circuitry 1270 alone or to other components of network node 1260, but are enjoyed by network node 1260 as a whole, and/or by end users and the wireless network generally.

Device readable medium 1280 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 1270. Device readable medium 1280 can store any suitable instructions, data or information, including a computer program, software, an application including one or more of logic, rules, code, tables, etc. and/or other instructions capable of being executed by processing circuitry 1270 and, utilized by network node 1260. Device readable medium 1280 can be used to store any calculations made by processing circuitry 1270 and/or any data received via interface 1290. In some embodiments, processing circuitry 1270 and device readable medium 1280 can be considered to be integrated.

Interface 1290 is used in the wired or wireless communication of signalling and/or data between network node 1260, network 1206, and/or WDs 1210. As illustrated, interface 1290 comprises port(s)/terminal(s) 1294 to send and receive data, for example to and from network 1206 over a wired connection. Interface 1290 also includes radio front end circuitry 1292 that can be coupled to, or in certain embodiments a part of, antenna 1262. Radio front end circuitry 1292 comprises filters 1298 and amplifiers 1296. Radio front end circuitry 1292 can be connected to antenna 1262 and processing circuitry 1270. Radio front end circuitry can be configured to condition signals communicated between antenna 1262 and processing circuitry 1270. Radio front end circuitry 1292 can receive digital data that is to be sent out to other network nodes or WDs via a wireless connection. Radio front end circuitry 1292 can convert the digital data into a radio signal having the appropriate channel and bandwidth parameters using a combination of filters 1298 and/or amplifiers 1296. The radio signal can then be transmitted via antenna 1262. Similarly, when receiving data, antenna 1262 can collect radio signals which are then converted into digital data by radio front end circuitry 1292. The digital data can be passed to processing circuitry 1270. In other embodiments, the interface can comprise different components and/or different combinations of components.

In certain alternative embodiments, network node 1260 may not include separate radio front end circuitry 1292, instead, processing circuitry 1270 can comprise radio front end circuitry and can be connected to antenna 1262 without separate radio front end circuitry 1292. Similarly, in some embodiments, all or some of RF transceiver circuitry 1272 can be considered a part of interface 1290. In still other embodiments, interface 1290 can include one or more ports or terminals 1294, radio front end circuitry 1292, and RF transceiver circuitry 1272, as part of a radio unit (not shown), and interface 1290 can communicate with baseband processing circuitry 1274, which is part of a digital unit (not shown).

Antenna 1262 can include one or more antennas, or antenna arrays, configured to send and/or receive wireless signals. Antenna 1262 can be coupled to radio front end circuitry 1290 and can be any type of antenna capable of transmitting and receiving data and/or signals wirelessly. In some embodiments, antenna 1262 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line-of-sight antenna used to transmit/receive radio signals in a relatively straight line. In some instances, the use of more than one antenna can be referred to as MIMO. In certain embodiments, antenna 1262 can be separate from network node 1260 and can be connectable to network node 1260 through an interface or port.

Antenna 1262, interface 1290, and/or processing circuitry 1270 can be configured to perform any receiving operations and/or certain obtaining operations described herein as being performed by a network node. Any information, data and/or signals can be received from a wireless device, another network node and/or any other network equipment. Similarly, antenna 1262, interface 1290, and/or processing circuitry 1270 can be configured to perform any transmitting operations described herein as being performed by a network node. Any information, data and/or signals can be transmitted to a wireless device, another network node and/or any other network equipment.

Power circuitry 1287 can comprise, or be coupled to, power management circuitry and can be configured to supply the components of network node 1260 with power for performing the functionality described herein. Power circuitry 1287 can receive power from power source 1286. Power source 1286 and/or power circuitry 1287 can be configured to provide power to the various components of network node 1260 in a form suitable for the respective components (e.g., at a voltage and current level needed for each respective component). Power source 1286 can either be included in, or external to, power circuitry 1287 and/or network node 1260. For example, network node 1260 can be connectable to an external power source (e.g., an electricity outlet) via an input circuitry or interface such as an electrical cable, whereby the external power source supplies power to power circuitry 1287. As a further example, power source 1286 can comprise a source of power in the form of a battery or battery pack which is connected to, or integrated in, power circuitry 1287. The battery can provide backup power should the external power source fail. Other types of power sources, such as photovoltaic devices, can also be used.

Alternative embodiments of network node 1260 can include additional components beyond those shown in Figure 12 that can be responsible for providing certain aspects of the network node's functionality, including any of the functionality described herein and/or any functionality necessary to support the subject matter described herein. For example, network node 1260 can include user interface equipment to allow and/or facilitate input of information into network node 1260 and to allow and/or facilitate output of information from network node 1260. This can allow and/or facilitate a user to perform diagnostic, maintenance, repair, and other administrative functions for network node 1260.

In some embodiments, a wireless device (WD, e.g., WD 1210) can be configured to transmit and/or receive information without direct human interaction. For instance, a WD can be designed to transmit information to a network on a predetermined schedule, when triggered by an internal or external event, or in response to requests from the network. Examples of a WD include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, etc.

A WD can support device-to-device (D2D) communication, for example by implementing a 3GPP standard for sidelink communication, vehicle-to-vehicle (V2V), vehicle-to-infrastructure (V2I), vehicle-to-everything (V2X) and can in this case be referred to as a D2D communication device. As yet another specific example, in an Internet of Things (IoT) scenario, a WD can represent a machine or other device that performs monitoring and/or measurements, and transmits the results of such monitoring and/or measurements to another WD and/or a network node. The WD can in this case be a machine-to-machine (M2M) device, which can in a 3GPP context be referred to as an MTC device. As one particular example, the WD can be a UE implementing the 3GPP narrow band internet of things (NB-IoT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD can represent a vehicle or other equipment that is capable of monitoring and/or reporting on its operational status or other functions associated with its operation. A WD as described above can represent the endpoint of a wireless connection, in which case the device can be referred to as a wireless terminal. Furthermore, a WD as described above can be mobile, in which case it can also be referred to as a mobile device or a mobile terminal.

As illustrated, wireless device 1210 includes antenna 1211, interface 1214, processing circuitry 1220, device readable medium 1230, user interface equipment 1232, auxiliary equipment 1234, power source 1236 and power circuitry 1237. WD 1210 can include multiple sets of one or more of the illustrated components for different wireless technologies supported by WD 1210, such as, for example, GSM, WCDMA, LTE, NR, WiFi, WiMAX, or Bluetooth wireless technologies, just to mention a few. These wireless technologies can be integrated into the same or different chips or set of chips as other components within WD 1210.

Antenna 1211 can include one or more antennas or antenna arrays, configured to send and/or receive wireless signals, and is connected to interface 1214. In certain alternative embodiments, antenna 1211 can be separate from WD 1210 and be connectable to WD 1210 through an interface or port. Antenna 1211, interface 1214, and/or processing circuitry 1220 can be configured to perform any receiving or transmitting operations described herein as being performed by a WD. Any information, data and/or signals can be received from a network node and/or another WD. In some embodiments, radio front end circuitry and/or antenna 1211 can be considered an interface.

As illustrated, interface 1214 comprises radio front end circuitry 1212 and antenna 1211. Radio front end circuitry 1212 comprise one or more filters 1218 and amplifiers 1216. Radio front end circuitry 1214 is connected to antenna 1211 and processing circuitry 1220, and can be configured to condition signals communicated between antenna 1211 and processing circuitry 1220. Radio front end circuitry 1212 can be coupled to or a part of antenna 1211. In some embodiments, WD 1210 may not include separate radio front end circuitry 1212; rather, processing circuitry 1220 can comprise radio front end circuitry and can be connected to antenna 1211. Similarly, in some embodiments, some or all of RF transceiver circuitry 1222 can be considered a part of interface 1214. Radio front end circuitry 1212 can receive digital data that is to be sent out to other network nodes or WDs via a wireless connection. Radio front end circuitry 1212 can convert the digital data into a radio signal having the appropriate channel and bandwidth parameters using a combination of filters 1218 and/or amplifiers 1216. The radio signal can then be transmitted via antenna 1211. Similarly, when receiving data, antenna 1211 can collect radio signals which are then converted into digital data by radio front end circuitry 1212. The digital data can be passed to processing circuitry 1220. In other embodiments, the interface can comprise different components and/or different combinations of components.

Processing circuitry 1220 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1210 components, such as device readable medium 1230, WD 1210 functionality. Such functionality can include providing any of the various wireless features or benefits discussed herein. For example, processing circuitry 1220 can execute instructions stored in device readable medium 1230 or in memory within processing circuitry 1220 to provide the functionality disclosed herein.

As illustrated, processing circuitry 1220 includes one or more of RF transceiver circuitry 1222, baseband processing circuitry 1224, and application processing circuitry 1226. In other embodiments, the processing circuitry can comprise different components and/or different combinations of components. In certain embodiments processing circuitry 1220 of WD 1210 can comprise a SOC. In some embodiments, RF transceiver circuitry 1222, baseband processing circuitry 1224, and application processing circuitry 1226 can be on separate chips or sets of chips. In alternative embodiments, part or all of baseband processing circuitry 1224 and application processing circuitry 1226 can be combined into one chip or set of chips, and RF transceiver circuitry 1222 can be on a separate chip or set of chips. In still alternative embodiments, part or all of RF transceiver circuitry 1222 and baseband processing circuitry 1224 can be on the same chip or set of chips, and application processing circuitry 1226 can be on a separate chip or set of chips. In yet other alternative embodiments, part or all of RF transceiver circuitry 1222, baseband processing circuitry 1224, and application processing circuitry 1226 can be combined in the same chip or set of chips. In some embodiments, RF transceiver circuitry 1222 can be a part of interface 1214. RF transceiver circuitry 1222 can condition RF signals for processing circuitry 1220.

In certain embodiments, some or all of the functionality described herein as being performed by a WD can be provided by processing circuitry 1220 executing instructions stored on device readable medium 1230, which in certain embodiments can be a computer-readable storage medium. In alternative embodiments, some or all of the functionality can be provided by processing circuitry 1220 without executing instructions stored on a separate or discrete device readable storage medium, such as in a hard-wired manner. In any of those particular embodiments, whether executing instructions stored on a device readable storage medium or not, processing circuitry 1220 can be configured to perform the described functionality. The benefits provided by such functionality are not limited to processing circuitry 1220 alone or to other components of WD 1210, but are enjoyed by WD 1210 as a whole, and/or by end users and the wireless network generally.

Processing circuitry 1220 can be configured to perform any determining, calculating, or similar operations (e.g., certain obtaining operations) described herein as being performed by a WD. These operations, as performed by processing circuitry 1220, can include processing information obtained by processing circuitry 1220 by, for example, converting the obtained information into other information, comparing the obtained information or converted information to information stored by WD 1210, and/or performing one or more operations based on the obtained information or converted information, and as a result of said processing making a determination.

Device readable medium 1230 can be operable to store a computer program, software, an application including one or more of logic, rules, code, tables, etc. and/or other instructions capable of being executed by processing circuitry 1220. Device readable medium 1230 can include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that can be used by processing circuitry 1220. In some embodiments, processing circuitry 1220 and device readable medium 1230 can be considered to be integrated.

User interface equipment 1232 can include components that allow and/or facilitate a human user to interact with WD 1210. Such interaction can be of many forms, such as visual, audial, tactile, etc. User interface equipment 1232 can be operable to produce output to the user and to allow and/or facilitate the user to provide input to WD 1210. The type of interaction can vary depending on the type of user interface equipment 1232 installed in WD 1210. For example, if WD 1210 is a smart phone, the interaction can be via a touch screen; if WD 1210 is a smart meter, the interaction can be through a screen that provides usage (e.g., the number of gallons used) or a speaker that provides an audible alert (e.g., if smoke is detected). User interface equipment 1232 can include input interfaces, devices and circuits, and output interfaces, devices and circuits. User interface equipment 1232 can be configured to allow and/or facilitate input of information into WD 1210, and is connected to processing circuitry 1220 to allow and/or facilitate processing circuitry 1220 to process the input information. User interface equipment 1232 can include, for example, a microphone, a proximity or other sensor, keys/buttons, a touch display, one or more cameras, a USB port, or other input circuitry. User interface equipment 1232 is also configured to allow and/or facilitate output of information from WD 1210, and to allow and/or facilitate processing circuitry 1220 to output information from WD 1210. User interface equipment 1232 can include, for example, a speaker, a display, vibrating circuitry, a USB port, a headphone interface, or other output circuitry. Using one or more input and output interfaces, devices, and circuits, of user interface equipment 1232, WD 1210 can communicate with end users and/or the wireless network, and allow and/or facilitate them to benefit from the functionality described herein.

Auxiliary equipment 1234 is operable to provide more specific functionality which may not be generally performed by WDs. This can comprise specialized sensors for doing measurements for various purposes, interfaces for additional types of communication such as wired communications etc. The inclusion and type of components of auxiliary equipment 1234 can vary depending on the embodiment and/or scenario.

Power source 1236 can, in some embodiments, be in the form of a battery or battery pack. Other types of power sources, such as an external power source (e.g., an electricity outlet), photovoltaic devices or power cells, can also be used. WD 1210 can further comprise power circuitry 1237 for delivering power from power source 1236 to the various parts of WD 1210 which need power from power source 1236 to carry out any functionality described or indicated herein. Power circuitry 1237 can in certain embodiments comprise power management circuitry. Power circuitry 1237 can additionally or alternatively be operable to receive power from an external power source; in which case WD 1210 can be connectable to the external power source (such as an electricity outlet) via input circuitry or an interface such as an electrical power cable. Power circuitry 1237 can also in certain embodiments be operable to deliver power from an external power source to power source 1236. This can be, for example, for the charging of power source 1236. Power circuitry 1237 can perform any converting or other modification to the power from power source 1236 to make it suitable for supply to the respective components of WD 1210.

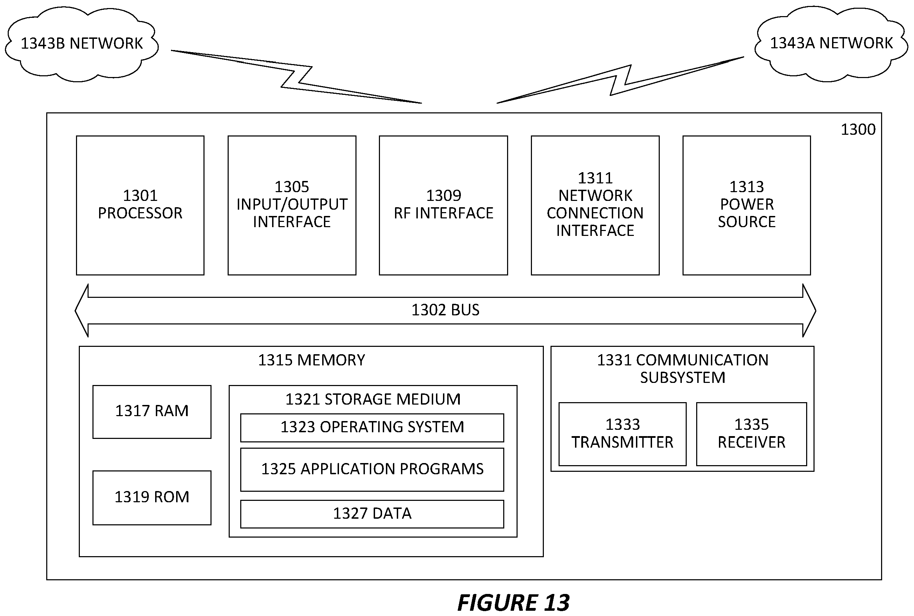

Figure 13 illustrates one embodiment of a UE in accordance with various aspects described herein. As used herein, a user equipment or UE may not necessarily have a user in the sense of a human user who owns and/or operates the relevant device. Instead, a UE can represent a device that is intended for sale to, or operation by, a human user but which may not, or which may not initially, be associated with a specific human user (e.g., a smart sprinkler controller). Alternatively, a UE can represent a device that is not intended for sale to, or operation by, an end user but which can be associated with or operated for the benefit of a user (e.g., a smart power meter). UE 1300 can be any UE identified by the 3rd Generation Partnership Project (3GPP), including a NB-IoT UE, a machine type communication (MTC) UE, and/or an enhanced MTC (eMTC) UE. UE 1300, as illustrated in Figure 13, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE can be used interchangeable. Accordingly, although Figure 13 is a UE, the components discussed herein are equally applicable to a WD, and vice-versa.

In Figure 13, UE 1300 includes processing circuitry 1301 that is operatively coupled to input/output interface 1305, radio frequency (RF) interface 1309, network connection interface 1311, memory 1315 including random access memory (RAM) 1317, read-only memory (ROM) 1319, and storage medium 1321 or the like, communication subsystem 1331, power source 1333, and/or any other component, or any combination thereof. Storage medium 1321 includes operating system 1323, application program 1325, and data 1327. In other embodiments, storage medium 1321 can include other similar types of information. Certain UEs can utilize all of the components shown in Figure 13, or only a subset of the components. The level of integration between the components can vary from one UE to another UE. Further, certain UEs can contain multiple instances of a component, such as multiple processors, memories, transceivers, transmitters, receivers, etc.

In Figure 13, processing circuitry 1301 can be configured to process computer instructions and data. Processing circuitry 1301 can be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1301 can include two central processing units (CPUs). Data can be information in a form suitable for use by a computer.

In the depicted embodiment, input/output interface 1305 can be configured to provide a communication interface to an input device, output device, or input and output device. UE 1300 can be configured to use an output device via input/output interface 1305. An output device can use the same type of interface port as an input device. For example, a USB port can be used to provide input to and output from UE 1300. The output device can be a speaker, a sound card, a video card, a display, a monitor, a printer, an actuator, an emitter, a smartcard, another output device, or any combination thereof. UE 1300 can be configured to use an input device via input/output interface 1305 to allow and/or facilitate a user to capture information into UE 1300. The input device can include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display can include a capacitive or resistive touch sensor to sense input from a user. A sensor can be, for instance, an accelerometer, a gyroscope, a tilt sensor, a force sensor, a magnetometer, an optical sensor, a proximity sensor, another like sensor, or any combination thereof. For example, the input device can be an accelerometer, a magnetometer, a digital camera, a microphone, and an optical sensor.

In Figure 13, RF interface 1309 can be configured to provide a communication interface to RF components such as a transmitter, a receiver, and an antenna. Network connection interface 1311 can be configured to provide a communication interface to network 1343a. Network 1343a can encompass wired and/or wireless networks such as a local-area network (LAN), a wide-area network (WAN), a computer network, a wireless network, a telecommunications network, another like network or any combination thereof. For example, network 1343a can comprise a Wi-Fi network. Network connection interface 1311 can be configured to include a receiver and a transmitter interface used to communicate with one or more other devices over a communication network according to one or more communication protocols, such as Ethernet, TCP/IP, SONET, ATM, or the like. Network connection interface 1311 can implement receiver and transmitter functionality appropriate to the communication network links (e.g., optical, electrical, and the like). The transmitter and receiver functions can share circuit components, software or firmware, or alternatively can be implemented separately.

RAM 1317 can be configured to interface via bus 1302 to processing circuitry 1301 to provide storage or caching of data or computer instructions during the execution of software programs such as the operating system, application programs, and device drivers. ROM 1319 can be configured to provide computer instructions or data to processing circuitry 1301. For example, ROM 1319 can be configured to store invariant low-level system code or data for basic system functions such as basic input and output (I/O), startup, or reception of keystrokes from a keyboard that are stored in a non-volatile memory. Storage medium 1321 can be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1321 can be configured to include operating system 1323, application program 1325 such as a web browser application, a widget or gadget engine or another application, and data file 1327. Storage medium 1321 can store, for use by UE 1300, any of a variety of various operating systems or combinations of operating systems.

Storage medium 1321 can be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1321 can allow and/or facilitate UE 1300 to access computer-executable instructions, application programs or the like, stored on transitory or non-transitory memory media, to off-load data, or to upload data. An article of manufacture, such as one utilizing a communication system can be tangibly embodied in storage medium 1321, which can comprise a device readable medium.

In Figure 13, processing circuitry 1301 can be configured to communicate with network 1343b using communication subsystem 1331. Network 1343a and network 1343b can be the same network or networks or different network or networks. Communication subsystem 1331 can be configured to include one or more transceivers used to communicate with network 1343b. For example, communication subsystem 1331 can be configured to include one or more transceivers used to communicate with one or more remote transceivers of another device capable of wireless communication such as another WD, UE, or base station of a radio access network (RAN) according to one or more communication protocols, such as IEEE 802.12, CDMA, WCDMA, GSM, LTE, UTRAN, WiMax, or the like. Each transceiver can include transmitter 1333 and/or receiver 1335 to implement transmitter or receiver functionality, respectively, appropriate to the RAN links (e.g., frequency allocations and the like). Further, transmitter 1333 and receiver 1335 of each transceiver can share circuit components, software or firmware, or alternatively can be implemented separately.

In the illustrated embodiment, the communication functions of communication subsystem 1331 can include data communication, voice communication, multimedia communication, short-range communications such as Bluetooth, near-field communication, location-based communication such as the use of the global positioning system (GPS) to determine a location, another like communication function, or any combination thereof. For example, communication subsystem 1331 can include cellular communication, Wi-Fi communication, Bluetooth communication, and GPS communication. Network 1343b can encompass wired and/or wireless networks such as a local-area network (LAN), a wide-area network (WAN), a computer network, a wireless network, a telecommunications network, another like network or any combination thereof. For example, network 1343b can be a cellular network, a Wi-Fi network, and/or a near-field network. Power source 1313 can be configured to provide alternating current (AC) or direct current (DC) power to components of UE 1300.

The features, benefits and/or functions described herein can be implemented in one of the components of UE 1300 or partitioned across multiple components of UE 1300. Further, the features, benefits, and/or functions described herein can be implemented in any combination of hardware, software or firmware. In one example, communication subsystem 1331 can be configured to include any of the components described herein. Further, processing circuitry 1301 can be configured to communicate with any of such components over bus 1302. In another example, any of such components can be represented by program instructions stored in memory that when executed by processing circuitry 1301 perform the corresponding functions described herein. In another example, the functionality of any of such components can be partitioned between processing circuitry 1301 and communication subsystem 1331. In another example, the non-computationally intensive functions of any of such components can be implemented in software or firmware and the computationally intensive functions can be implemented in hardware.

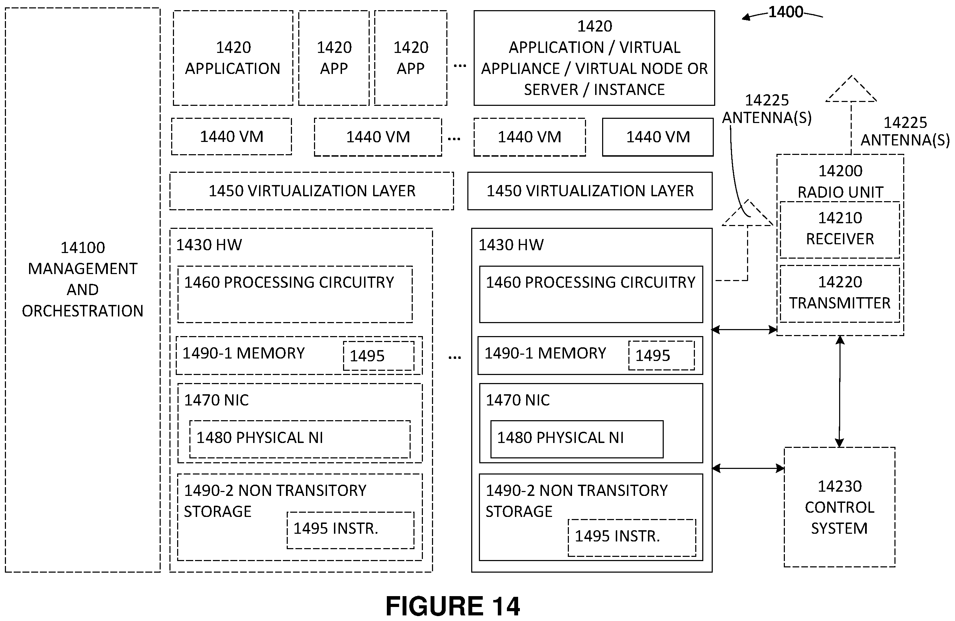

Figure 14 is a schematic block diagram illustrating a virtualization environment 1400 in which functions implemented by some embodiments can be virtualized. In the present context, virtualizing means creating virtual versions of apparatuses or devices which can include virtualizing hardware platforms, storage devices and networking resources.

As used herein, virtualization can be applied to a node (e.g., a virtualized base station, a virtualized radio access node, virtualized core network node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 1400 hosted by one or more of hardware nodes 1430. Further, in embodiments in which the virtual node is not a radio access node or does not require radio connectivity (e.g., a core network node), then the network node can be entirely virtualized.

The functions can be implemented by one or more applications 1420 (which can alternatively be called software instances, virtual appliances, network functions, virtual nodes, virtual network functions, etc.) operative to implement some of the features, functions, and/or benefits of some of the embodiments disclosed herein. Applications 1420 are run in virtualization environment 1400 which provides hardware 1430 comprising processing circuitry 1460 and memory 1490. Memory 1490 contains instructions 1495 executable by processing circuitry 1460 whereby application 1420 is operative to provide one or more of the features, benefits, and/or functions disclosed herein.

Virtualization environment 1400, comprises general-purpose or special-purpose network hardware devices 1430 comprising a set of one or more processors or processing circuitry 1460, which can be commercial off-the-shelf (COTS) processors, dedicated Application Specific Integrated Circuits (ASICs), or any other type of processing circuitry including digital or analog hardware components or special purpose processors. Each hardware device can comprise memory 1490-1 which can be non-persistent memory for temporarily storing instructions 1495 or software executed by processing circuitry 1460. Each hardware device can comprise one or more network interface controllers (NICs) 1470, also known as network interface cards, which include physical network interface 1480. Each hardware device can also include non-transitory, persistent, machine-readable storage media 1490-2 having stored therein software 1495 and/or instructions executable by processing circuitry 1460. Software 1495 can include any type of software including software for instantiating one or more virtualization layers 1450 (also referred to as hypervisors), software to execute virtual machines 1440 as well as software allowing it to execute functions, features and/or benefits described in relation with some embodiments described herein.

Virtual machines 1440, comprise virtual processing, virtual memory, virtual networking or interface and virtual storage, and can be run by a corresponding virtualization layer 1450 or hypervisor. Different embodiments of the instance of virtual appliance 1420 can be implemented on one or more of virtual machines 1440, and the implementations can be made in different ways.

During operation, processing circuitry 1460 executes software 1495 to instantiate the hypervisor or virtualization layer 1450, which can sometimes be referred to as a virtual machine monitor (VMM). Virtualization layer 1450 can present a virtual operating platform that appears like networking hardware to virtual machine 1440.

As shown in Figure 14, hardware 1430 can be a standalone network node with generic or specific components. Hardware 1430 can comprise antenna 14225 and can implement some functions via virtualization. Alternatively, hardware 1430 can be part of a larger cluster of hardware (e.g., in a data center or customer premise equipment (CPE)) where many hardware nodes work together and are managed via management and orchestration (MANO) 14100, which, among others, oversees lifecycle management of applications 1420.

Virtualization of the hardware is in some contexts referred to as network function virtualization (NFV). NFV can be used to consolidate many network equipment types onto industry standard high volume server hardware, physical switches, and physical storage, which can be located in data centers, and customer premise equipment.

In the context of NFV, virtual machine 1440 can be a software implementation of a physical machine that runs programs as if they were executing on a physical, non-virtualized machine. Each of virtual machines 1440, and that part of hardware 1430 that executes that virtual machine, be it hardware dedicated to that virtual machine and/or hardware shared by that virtual machine with others of the virtual machines 1440, forms a separate virtual network element (VNE).

In the context of NFV, Virtual Network Function (VNF) is responsible for handling specific network functions that run in one or more virtual machines 1440 on top of hardware networking infrastructure 1430, and can correspond to application 1420 in Figure 14.

In some embodiments, one or more radio units 14200 that each include one or more transmitters 14220 and one or more receivers 14210 can be coupled to one or more antennas 14225. Radio units 14200 can communicate directly with hardware nodes 1430 via one or more appropriate network interfaces and can be used in combination with the virtual components to provide a virtual node with radio capabilities, such as a radio access node or a base station.

In some embodiments, some signalling can be affected with the use of control system 14230 which can alternatively be used for communication between the hardware nodes 1430 and radio units 14200.

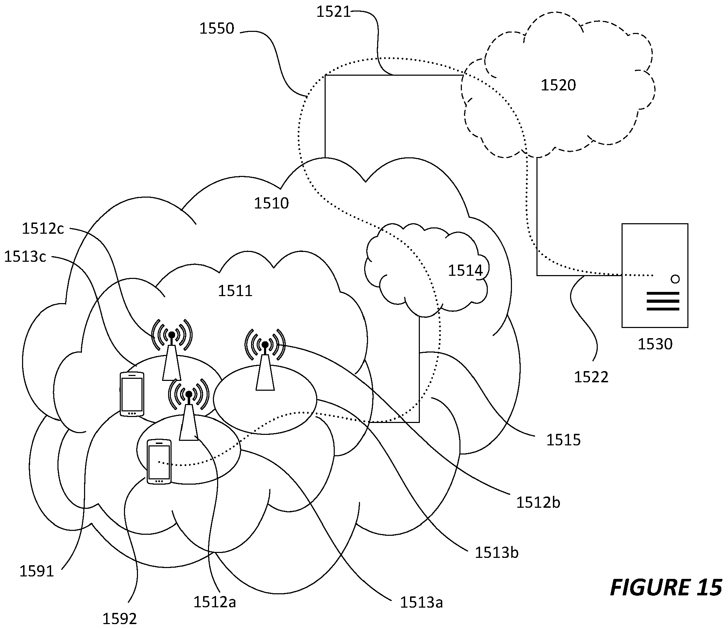

With reference to Figure 15, in accordance with an embodiment, a communication system includes telecommunication network 1510, such as a 3GPP-type cellular network, which comprises access network 1511, such as a radio access network, and core network 1514. Access network 1511 comprises a plurality of base stations 1512a, 1512b, 1512c, such as NBs, eNBs, gNBs or other types of wireless access points, each defining a corresponding coverage area 1513a, 1513b, 1513c. Each base station 1512a, 1512b, 1512c is connectable to core network 1514 over a wired or wireless connection 1515. A first UE 1591 located in coverage area 1513c can be configured to wirelessly connect to, or be paged by, the corresponding base station 1512c. A second UE 1592 in coverage area 1513a is wirelessly connectable to the corresponding base station 1512a. While a plurality of UEs 1591, 1592 are illustrated in this example, the disclosed embodiments are equally applicable to a situation where a sole UE is in the coverage area or where a sole UE is connecting to the network.

Telecommunication network 1510 is itself connected to host computer 1530, which can be embodied in the hardware and/or software of a standalone server, a cloud-implemented server, a distributed server or as processing resources in a server farm. Host computer 1530 can be under the ownership or control of a service provider, or can be operated by the service provider or on behalf of the service provider. Connections 1521 and 1522 between telecommunication network 1510 and host computer 1530 can extend directly from core network 1514 to host computer 1530 or can go via an optional intermediate network 1520. Intermediate network 1520 can be one of, or a combination of more than one of, a public, private or hosted network; intermediate network 1520, if any, can be a backbone network or the Internet; in particular, intermediate network 1520 can comprise two or more sub-networks (not shown).

The communication system of Figure 15 as a whole enables connectivity between the connected UEs 1591, 1592 and host computer 1530. The connectivity can be described as an over-the-top (OTT) connection 1550. Host computer 1530 and the connected UEs 1591, 1592 are configured to communicate data and/or signaling via OTT connection 1550, using access network 1511, core network 1514, any intermediate network 1520 and possible further infrastructure (not shown) as intermediaries. OTT connection 1550 can be transparent in the sense that the participating communication devices through which OTT connection 1550 passes are unaware of routing of uplink and downlink communications. For example, base station 1512 may not or need not be informed about the past routing of an incoming downlink communication with data originating from host computer 1530 to be forwarded (e.g., handed over) to a connected UE 1591. Similarly, base station 1512 need not be aware of the future routing of an outgoing uplink communication originating from the UE 1591 towards the host computer 1530.

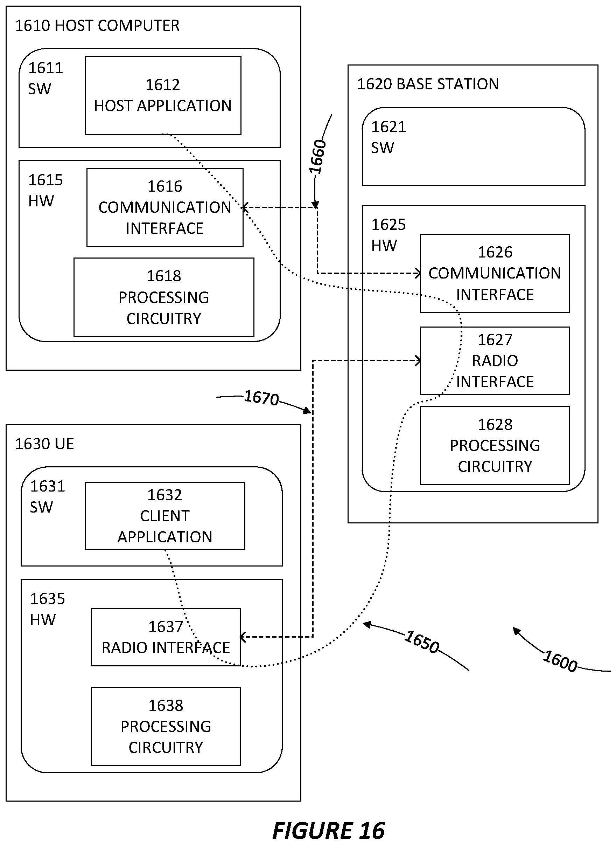

Example implementations, in accordance with an embodiment, of the UE, base station and host computer discussed in the preceding paragraphs will now be described with reference to Figure 16. In communication system 1600, host computer 1610 comprises hardware 1615 including communication interface 1616 configured to set up and maintain a wired or wireless connection with an interface of a different communication device of communication system 1600. Host computer 1610 further comprises processing circuitry 1618, which can have storage and/or processing capabilities. In particular, processing circuitry 1618 can comprise one or more programmable processors, application-specific integrated circuits, field programmable gate arrays or combinations of these (not shown) adapted to execute instructions. Host computer 1610 further comprises software 1611, which is stored in or accessible by host computer 1610 and executable by processing circuitry 1618. Software 1611 includes host application 1612. Host application 1612 can be operable to provide a service to a remote user, such as UE 1630 connecting via OTT connection 1650 terminating at UE 1630 and host computer 1610. In providing the service to the remote user, host application 1612 can provide user data which is transmitted using OTT connection 1650.

Communication system 1600 can also include base station 1620 provided in a telecommunication system and comprising hardware 1625 enabling it to communicate with host computer 1610 and with UE 1630. Hardware 1625 can include communication interface 1626 for setting up and maintaining a wired or wireless connection with an interface of a different communication device of communication system 1600, as well as radio interface 1627 for setting up and maintaining at least wireless connection 1670 with UE 1630 located in a coverage area (not shown in Figure 16) served by base station 1620. Communication interface 1626 can be configured to facilitate connection 1660 to host computer 1610. Connection 1660 can be direct or it can pass through a core network (not shown in Figure 16) of the telecommunication system and/or through one or more intermediate networks outside the telecommunication system. In the embodiment shown, hardware 1625 of base station 1620 can also include processing circuitry 1628, which can comprise one or more programmable processors, application-specific integrated circuits, field programmable gate arrays or combinations of these (not shown) adapted to execute instructions. Base station 1620 further has software 1621 stored internally or accessible via an external connection.

Communication system 1600 can also include UE 1630 already referred to. Its hardware 1635 can include radio interface 1637 configured to set up and maintain wireless connection 1670 with a base station serving a coverage area in which UE 1630 is currently located. Hardware 1635 of UE 1630 can also include processing circuitry 1638, which can comprise one or more programmable processors, application-specific integrated circuits, field programmable gate arrays or combinations of these (not shown) adapted to execute instructions. UE 1630 further comprises software 1631, which is stored in or accessible by UE 1630 and executable by processing circuitry 1638. Software 1631 includes client application 1632. Client application 1632 can be operable to provide a service to a human or non-human user via UE 1630, with the support of host computer 1610. In host computer 1610, an executing host application 1612 can communicate with the executing client application 1632 via OTT connection 1650 terminating at UE 1630 and host computer 1610. In providing the service to the user, client application 1632 can receive request data from host application 1612 and provide user data in response to the request data. OTT connection 1650 can transfer both the request data and the user data. Client application 1632 can interact with the user to generate the user data that it provides.

It is noted that host computer 1610, base station 1620 and UE 1630 illustrated in Figure 16 can be similar or identical to host computer 1530, one of base stations 1512a, 1512b, 1512c and one of UEs 1591, 1592 of Figure 15, respectively. This is to say, the inner workings of these entities can be as shown in Figure 16 and independently, the surrounding network topology can be that of Figure 15.

In Figure 16, OTT connection 1650 has been drawn abstractly to illustrate the communication between host computer 1610 and UE 1630 via base station 1620, without explicit reference to any intermediary devices and the precise routing of messages via these devices. Network infrastructure can determine the routing, which it can be configured to hide from UE 1630 or from the service provider operating host computer 1610, or both. While OTT connection 1650 is active, the network infrastructure can further take decisions by which it dynamically changes the routing (e.g., on the basis of load balancing consideration or reconfiguration of the network).

Wireless connection 1670 between UE 1630 and base station 1620 is in accordance with the teachings of the embodiments described throughout this disclosure. One or more of the various embodiments improve the performance of OTT services provided to UE 1630 using OTT connection 1650, in which wireless connection 1670 forms the last segment. More precisely, the exemplary embodiments disclosed herein can improve flexibility for the network to monitor end-to-end quality-of-service (QoS) of data flows, including their corresponding radio bearers, associated with data sessions between a user equipment (UE) and another entity, such as an OTT data application or service external to the 5G network. These and other advantages can facilitate more timely design, implementation, and deployment of 5G/NR solutions. Furthermore, such embodiments can facilitate flexible and timely control of data session QoS, which can lead to improvements in capacity, throughput, latency, etc. that are envisioned by 5G/NR and important for the growth of OTT services.

A measurement procedure can be provided for the purpose of monitoring data rate, latency and other network operational aspects on which the one or more embodiments improve. There can further be an optional network functionality for reconfiguring OTT connection 1650 between host computer 1610 and UE 1630, in response to variations in the measurement results. The measurement procedure and/or the network functionality for reconfiguring OTT connection 1650 can be implemented in software 1611 and hardware 1615 of host computer 1610 or in software 1631 and hardware 1635 of UE 1630, or both. In embodiments, sensors (not shown) can be deployed in or in association with communication devices through which OTT connection 1650 passes; the sensors can participate in the measurement procedure by supplying values of the monitored quantities exemplified above, or supplying values of other physical quantities from which software 1611, 1631 can compute or estimate the monitored quantities. The reconfiguring of OTT connection 1650 can include message format, retransmission settings, preferred routing etc.; the reconfiguring need not affect base station 1620, and it can be unknown or imperceptible to base station 1620. Such procedures and functionalities can be known and practiced in the art. In certain embodiments, measurements can involve proprietary UE signaling facilitating host computer 1610's measurements of throughput, propagation times, latency and the like. The measurements can be implemented in that software 1611 and 1631 causes messages to be transmitted, in particular empty or 'dummy' messages, using OTT connection 1650 while it monitors propagation times, errors etc.

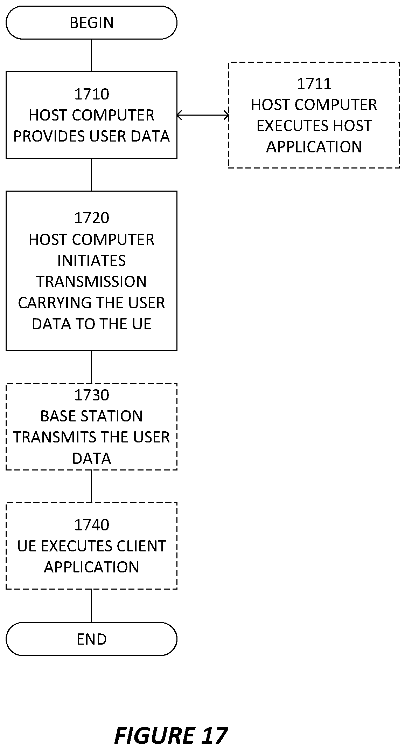

Figure 17 is a flowchart illustrating an exemplary method and/or procedure implemented in a communication system, in accordance with one embodiment. The communication system includes a host computer, a base station and a UE which, in some exemplary embodiments, can be those described with reference to Figures 15 and 16. For simplicity of the present disclosure, only drawing references to Figure 17 will be included in this section. In step 1710, the host computer provides user data. In substep 1711 (which can be optional) of step 1710, the host computer provides the user data by executing a host application. In step 1720, the host computer initiates a transmission carrying the user data to the UE. In step 1730 (which can be optional), the base station transmits to the UE the user data which was carried in the transmission that the host computer initiated, in accordance with the teachings of the embodiments described throughout this disclosure. In step 1740 (which can also be optional), the UE executes a client application associated with the host application executed by the host computer.

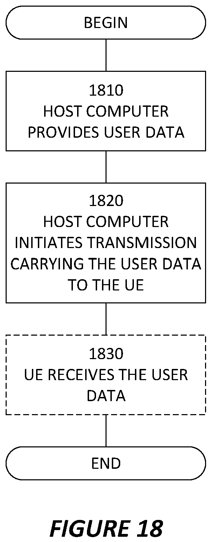

Figure 18 is a flowchart illustrating an exemplary method and/or procedure implemented in a communication system, in accordance with one embodiment. The communication system includes a host computer, a base station and a UE which can be those described with reference to Figures 15 and 16. For simplicity of the present disclosure, only drawing references to Figure 18 will be included in this section. In step 1810 of the method, the host computer provides user data. In an optional substep (not shown) the host computer provides the user data by executing a host application. In step 1820, the host computer initiates a transmission carrying the user data to the UE. The transmission can pass via the base station, in accordance with the teachings of the embodiments described throughout this disclosure. In step 1830 (which can be optional), the UE receives the user data carried in the transmission.

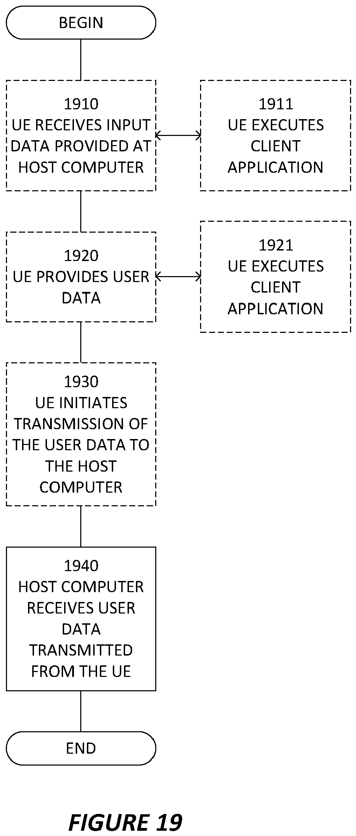

Figure 19 is a flowchart illustrating an exemplary method and/or procedure implemented in a communication system, in accordance with one embodiment. The communication system includes a host computer, a base station and a UE which can be those described with reference to Figures 15 and 16. For simplicity of the present disclosure, only drawing references to Figure 19 will be included in this section. In step 1910 (which can be optional), the UE receives input data provided by the host computer. Additionally or alternatively, in step 1920, the UE provides user data. In substep 1921 (which can be optional) of step 1920, the UE provides the user data by executing a client application. In substep 1911 (which can be optional) of step 1910, the UE executes a client application which provides the user data in reaction to the received input data provided by the host computer. In providing the user data, the executed client application can further consider user input received from the user. Regardless of the specific manner in which the user data was provided, the UE initiates, in substep 1930 (which can be optional), transmission of the user data to the host computer. In step 1940 of the method, the host computer receives the user data transmitted from the UE, in accordance with the teachings of the embodiments described throughout this disclosure.

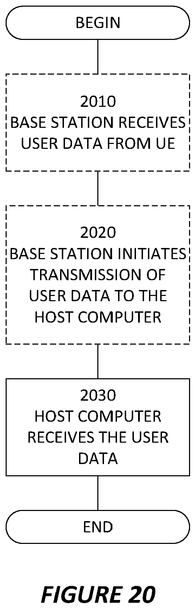

Figure 20 is a flowchart illustrating an exemplary method and/or procedure implemented in a communication system, in accordance with one embodiment. The communication system includes a host computer, a base station and a UE which can be those described with reference to Figures 15 and 16. For simplicity of the present disclosure, only drawing references to Figure 20 will be included in this section. In step 2010 (which can be optional), in accordance with the teachings of the embodiments described throughout this disclosure, the base station receives user data from the UE. In step 2020 (which can be optional), the base station initiates transmission of the received user data to the host computer. In step 2030 (which can be optional), the host computer receives the user data carried in the transmission initiated by the base station.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the spirit and scope of the disclosure. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. In addition, certain terms used in the present disclosure, including the specification, drawings and exemplary embodiments thereof, can be used synonymously in certain instances, including, but not limited to, e.g., data and information. It should be understood that, while these words and/or other words that can be synonymous to one another, can be used synonymously herein, that there can be instances when such words can be intended to not be used synonymously.

| Abbreviation | Explanation |
|---|---|
| ACK | Acknowledgement |
| AP | Application Protocol |
| BSR | Buffer Status Report |
| BWP | Bandwidth Part |
| C-RNTI | Cell Radio Network Temporary Identifier |
| CA | Carrier Aggregation |
| CE | Control Element |
| CP | Control Plane |
| CQI | Channel Quality Indicator |
| DC | Dual Connectivity |
| DCI | Downlink Control Information |
| DL | Downlink |
| DRB | Data Radio Bearer |
| eNB | (EUTRAN) base station |
| E-RAB | EUTRAN Radio Access Bearer |
| FDD | Frequency Division Duplex |
| gNB | NR base station |
| GTP-U | GPRS Tunneling Protocol - User Plane |
| IP | Internet Protocol |
| LTE | Long Term Evolution |
| MCG | Master Cell Group |
| MAC | Medium Access Control |
| MeNB | Master eNB |
| MgNB | Master gNB |
| MN | Master Node |
| NACK | Negative Acknowledgement |
| NR | New Radio |
| PDCP | Packet Data Convergence Protocol |
| PCell | Primary Cell |
| PCI | Physical Cell Identity |
| PSCell | Primary SCell |
| PUSCH | Physical Uplink Shared Channel |
| RLC | Radio Link Control |
| RLF | Radio Link Failure |
| RRC | Radio Resource Control |
| SCell | Secondary Cell |
| SCG | Secondary Cell Group |
| SCTP | Stream Control Transmission Protocol |
| SeNB | Secondary eNB |
| SINR | Signal to Interference plus Noise Ratio |
| SN | Secondary Node |
| SR | Scheduling Request |
| SRB | Signaling Radio Bearer |
| SUL | Supplementary uplink |
| TDD | Time Division Duplex |
| TEID | Tunnel Endpoint IDentifier |
| TNL | Transport Network Layer |
| UCI | Uplink Control Information |
| UDP | User Datagram Protocol |
| UE | User Equipment |

(continued)

| Abbreviation | Explanation |
| --- | --- |
| UL | Uplink |
| UP | User Plane |
| URLLC | Ultra Reliable Low Latency Communication |
| X2 | Interface between base stations |

**Claims**

1. A method, performed by a first network node operating as a secondary node, SN, in dual connectivity with a user equipment, UE, the method comprising:
   sending (1010), towards a second network node operating as a master node, MN, in dual connectivity with the UE, an indication that a secondary cell group, SCG, configuration for the UE is to be released the method being **characterised in that** the release of the SCG configuration involves release of PHY, MAC and RLC configuration for one or more SCG bearers or split bearers without a release of the corresponding PDCP configuration/s.

2. The method of claim 1, wherein sending (1010) the indication comprises including the indication in an SN-initiated modification procedure.

3. The method of claim 2, wherein the method further comprises sending to the second network node a list of one or more SN-terminated split bearers and/or SN-terminated SCG bearers corresponding to the SCG configuration that are to be reconfigured to SN-terminated Master Control Group, MCG, bearers.

4. The method of claim 2 or 3, wherein the method further comprises sending to the second network node a list of one or more SN-terminated split bearers and/or SN-terminated SCG bearers corresponding to the SCG configuration that are to be released.

5. The method of claim 2, wherein the method further comprises sending to the second network node an indication that all SN-terminated split bearers and SN-terminated SCG bearers corresponding to the SCG configuration are to be reconfigured to SN-terminated Master Control Group, MCG, bearers.

6. The method of claim 2, wherein the method further comprises sending to the second network node an indication that all SN-terminated split bearers and SN-terminated SCG bearers corresponding to the SCG configuration are to be released.

7. A method, performed by a first network node operating as a master node, MN, in dual connectivity with a user equipment, UE, the method comprising:
   receiving (1110), from a second network node operating as a secondary node, SN, in dual connectivity with the UE, an indication that a secondary cell group, SCG, configuration for the UE is to be released the method being **characterised in that** the release of the SCG configuration involves release of PHY, MAC and RLC configuration for one or more SCG bearers or split bearers without a release of the corresponding PDCP configuration/s.

8. The method of claim 7, wherein receiving (1110) the indication comprises receiving the indication in an SN-initiated modification procedure.

9. The method of claim 8, wherein the method further comprises receiving, from the second network node, a list of one or more SN-terminated split bearers and/or SN-terminated SCG bearers corresponding to the SCG configuration that are to be reconfigured to SN-terminated Master Control Group, MCG, bearers.

10. The method of claim 8 or 9, wherein the method further comprises receiving, from the second network node, a list of one or more SN-terminated split bearers and/or SN-terminated SCG bearers corresponding to the SCG configuration that are to be released.

11. A network node adapted to operate as a secondary node, SN, in dual connectivity with a user equipment, UE, the network node being further adapted to:
    send, towards a second network node operating as a master node, MN, in dual connectivity with the UE, an indication that a secondary cell group, SCG, configuration for the UE is to be released wherein release of the SCG configuration involves release of PHY, MAC and RLC configuration for one or more SCG bearers or split bearers without a release of the corresponding PDCP configuration/s.

12. The network node of claim 11 further adapted to carry out a method according to any one of claims 2-6.

13. A network node adapted to operate as a master node, MN, in dual connectivity with a user equipment, UE, the network node being further adapted to:
receive, from a second network node operating as a secondary node, SN, in dual connectivity with the UE, an indication that a secondary cell group, SCG, configuration for the UE is to be released, wherein release of the SCG configuration involves release of PHY, MAC and RLC configuration for one or more SCG bearers or split bearers without a release of the corresponding PDCP configuration/s.

14. The network node of claim 13 further adapted to carry out a method according to any one of claims 8-10.

15. A computer program product comprising computer program instructions for execution by processing circuitry of a network node, the computer program instructions being configured to cause the network node to carry out a method according to any one of claims 1-10.


**Patentansprüche**

1. Verfahren, durchgeführt durch einen ersten Netzwerkknoten, der als sekundärer Knoten, SN, in dualer Konnektivität mit einem Benutzergerät, UE, fungiert, wobei das Verfahren Folgendes umfasst:
Senden (1010), an einen zweiten Netzwerkknoten, der als Masterknoten, MN, in dualer Konnektivität mit dem UE fungiert, einer Anzeige, dass eine Sekundärzellengruppen-, SCG-, Konfiguration für das UE freizugeben ist, wobei das Verfahren **dadurch gekennzeichnet ist, dass** die Freigabe der SCG-Konfiguration eine Freigabe von PHY-, MAC- und RLC-Konfiguration für einen oder mehrere SCG-Träger oder geteilte Träger ohne eine Freigabe der entsprechenden PDCP-Konfiguration(en) beinhaltet.

2. Verfahren nach Anspruch 1, wobei das Senden (1010) der Anzeige Einschließen der Anzeige in einer SN-initiierten Modifikationsprozedur umfasst.

3. Verfahren nach Anspruch 2, wobei das Verfahren ferner Senden, an den zweiten Netzwerkknoten, einer Liste von einem oder mehreren SN-terminierten geteilten Trägern und/oder SN-terminierten SCG-Trägern, die der SCG-Konfiguration entsprechen und die als SN-terminierte Mastersteuerungsgruppen-, MCG-, Träger zu rekonfigurieren sind, umfasst.

4. Verfahren nach Anspruch 2 oder 3, wobei das Verfahren ferner Senden, an den zweiten Netzwerkknoten, einer Liste von einem oder mehreren SN-terminierten geteilten Trägern und/oder SN-terminierten SCG-Trägern, die der SCG-Konfiguration entsprechen und die freizugeben sind, umfasst.

5. Verfahren nach Anspruch 2, wobei das Verfahren ferner Senden, an den zweiten Netzwerkknoten, einer Anzeige, dass alle SN-terminierten geteilten Träger und SN-terminierten SCG-Träger, die der SCG-Konfiguration entsprechen, als SN-terminierte Mastersteuerungsgruppen-, MCG-, Träger zu rekonfigurieren sind, umfasst.

6. Verfahren nach Anspruch 2, wobei das Verfahren ferner Senden, an den zweiten Netzwerkknoten, einer Anzeige, dass alle SN-terminierten geteilten Träger und SN-terminierten SCG-Träger, die der SCG-Konfiguration entsprechen, freizugeben sind, umfasst.

7. Verfahren, durchgeführt durch einen ersten Netzwerkknoten, der als Masterknoten, MN, in dualer Konnektivität mit einem Benutzergerät, UE, fungiert, wobei das Verfahren Folgendes umfasst:
Empfangen (1110), von einem zweiten Netzwerkknoten, der als sekundärer Knoten, SN, in dualer Konnektivität mit dem UE fungiert, einer Anzeige, dass eine Sekundärzellengruppen-, SCG-, Konfiguration für das UE freizugeben ist, wobei das Verfahren **dadurch gekennzeichnet ist, dass** die Freigabe der SCG-Konfiguration eine Freigabe von PHY-, MAC- und RLC-Konfiguration für einen oder mehrere SCG-Träger oder geteilte Träger ohne eine Freigabe der entsprechenden PDCP-Konfiguration(en) beinhaltet.

8. Verfahren nach Anspruch 7, wobei das Empfangen (1110) der Anzeige Empfangen der Anzeige in einer SN-initiierten Modifikationsprozedur umfasst.

9. Verfahren nach Anspruch 8, wobei das Verfahren ferner Empfangen, von dem zweiten Netzwerkknoten, einer Liste von einem oder mehreren SN-terminierten geteilten Trägern und/oder SN-terminierten SCG-Trägern, die der SCG-Konfiguration entsprechen und die als SN-terminierte Mastersteuerungsgruppen-, MCG-, Träger zu rekonfigurieren sind, umfasst.

10. Verfahren nach Anspruch 8 oder 9, wobei das Verfahren ferner Empfangen, von dem zweiten Netzwerkknoten, einer Liste von einem oder mehreren SN-terminierten geteilten Trägern und/oder SN-terminierten SCG-Trägern, die der SCG-Konfiguration entsprechen und die freizugeben sind, umfasst.

11. Netzwerkknoten, der dazu ausgelegt ist, als sekundärer Knoten, SN, in dualer Konnektivität mit einem Benutzergerät, UE, zu fungieren, wobei der Netzwerkknoten ferner zu Folgendem ausgelegt ist:
Senden, an einen zweiten Netzwerkknoten, der als Masterknoten, MN, in dualer Konnektivität mit dem UE fungiert, einer Anzeige, dass eine Sekundärzellengruppen-, SCG-, Konfiguration für das UE freizugeben ist, wobei die Freigabe der SCG-Konfiguration eine Freigabe von PHY-, MAC- und RLC-Konfiguration für einen oder mehrere SCG-Träger oder geteilte Träger ohne eine Freigabe der entsprechenden PDCP-Konfiguration(en) beinhaltet.

12. Netzwerkknoten nach Anspruch 11, der ferner dazu ausgelegt ist, ein Verfahren nach einem der Ansprüche 2-6 auszuführen.

13. Netzwerkknoten, der dazu ausgelegt ist, als Masterknoten, MN, in dualer Konnektivität mit einem Benutzergerät, UE, zu fungieren, wobei der Netzwerkknoten ferner zu Folgendem ausgelegt ist:
Empfangen, von einem zweiten Netzwerkknoten, der als sekundärer Knoten, SN, in dualer Konnektivität mit dem UE fungiert, einer Anzeige, dass eine Sekundärzellengruppen-, SCG-, Konfiguration für das UE freizugeben ist, wobei die Freigabe der SCG-Konfiguration eine Freigabe von PHY-, MAC- und RLC-Konfiguration für einen oder mehrere SCG-Träger oder geteilte Träger ohne eine Freigabe der entsprechenden PDCP-Konfiguration(en) beinhaltet.

14. Netzwerkknoten nach Anspruch 13, der ferner dazu ausgelegt ist, ein Verfahren nach einem der Ansprüche 8-10 auszuführen.

15. Computerprogrammprodukt, umfassend Computerprogrammanweisungen zur Ausführung durch eine Verarbeitungsschaltung eines Netzwerkknotens, wobei die Computerprogrammanweisungen dazu konfiguriert sind, den Netzwerkknoten dazu zu veranlassen, ein Verfahren nach einem der Ansprüche 1-10 auszuführen.

**Revendications**

1. Procédé, exécuté par un premier noeud de réseau fonctionnant comme noeud secondaire, SN, en double connectivité avec un équipement utilisateur, UE, le procédé comprenant :
l'envoi (1010), vers un second noeud de réseau fonctionnant comme noeud principal, MN, en double connectivité avec l'UE, d'une indication selon laquelle une configuration de groupe de cellules secondaires, SCG, pour l'UE doit être libérée, le procédé étant **caractérisé en ce que** la libération de la configuration SCG implique la libération de la configuration PHY, MAC et RLC pour un ou plusieurs supports SCG ou supports divisés sans libération de la ou des configuration(s) PDCP correspondante(s).

2. Procédé selon la revendication 1, dans lequel l'envoi (1010) de l'indication comprend l'inclusion de l'indication dans une procédure de modification initiée par SN.

3. Procédé selon la revendication 2, dans lequel le procédé comprend en outre l'envoi au second noeud de réseau d'une liste d'un ou de plusieurs supports divisés terminés par SN et/ou de supports SCG terminés par SN correspondant à la configuration SCG qui doivent être reconfigurés en supports de groupe de commande principal, MCG, terminés par SN.

4. Procédé selon la revendication 2 ou 3, dans lequel le procédé comprend en outre l'envoi au second noeud de réseau d'une liste d'un ou de plusieurs supports divisés terminés par SN et/ou de supports SCG terminés par SN correspondant à la configuration SCG qui doivent être libérés.

5. Procédé selon la revendication 2, dans lequel le procédé comprend en outre l'envoi au second noeud de réseau d'une indication selon laquelle tous les supports divisés terminés par SN et les supports SCG terminés par SN correspondant à la configuration SCG doivent être reconfigurés en supports de groupe de commande principal, MCG, terminés par SN.

6. Procédé selon la revendication 2, dans lequel le procédé comprend en outre l'envoi au second noeud de réseau d'une indication selon laquelle tous les supports divisés terminés par SN et les supports SCG terminés par SN correspondant à la configuration SCG doivent être libérés.

7. Procédé, exécuté par un premier noeud de réseau fonctionnant comme noeud principal, MN, en double connectivité avec un équipement utilisateur, UE, le procédé comprenant :
la réception (1110), d'un second noeud de réseau fonctionnant comme noeud secondaire, SN, en double connectivité avec l'UE, d'une indication selon laquelle une configuration de groupe de cellules secondaires, SCG, pour l'UE doit être libérée, le procédé étant **caractérisé en ce que** la libération de la configuration SCG implique la libération de la configuration PHY, MAC et RLC pour un ou plusieurs supports SCG ou supports divisés sans libération de la ou des configuration(s) PDCP correspondante(s).

8. Procédé selon la revendication 7, dans lequel la réception (1110) de l'indication comprend la réception de l'indication dans une procédure de modification initiée par SN.

9. Procédé selon la revendication 8, dans lequel le procédé comprend en outre la réception, du second noeud de réseau, d'une liste d'un ou de plusieurs supports divisés terminés par SN et/ou de supports SCG terminés par SN correspondant à la configuration SCG qui doivent être reconfigurés en supports de groupe de commande principal, MCG, terminés par SN.

10. Procédé selon la revendication 8 ou 9, dans lequel le procédé comprend en outre la réception, du second noeud de réseau, d'une liste d'un ou de plusieurs supports divisés terminés par SN et/ou de supports SCG terminés par SN correspondant à la configuration SCG qui doivent être libérées.

11. Noeud de réseau adapté pour fonctionner comme noeud secondaire, SN, en double connectivité avec un équipement utilisateur, UE, le noeud de réseau étant en outre adapté pour :
envoyer, vers un second noeud de réseau fonctionnant comme noeud principal, MN, en double connectivité avec l'UE, une indication selon laquelle une configuration de groupe de cellules secondaires, SCG, pour l'UE doit être libérée, la libération de la configuration SCG impliquant la libération de la configuration PHY, MAC et RLC pour un ou plusieurs supports SCG ou supports divisés sans libération de la ou des configuration(s) PDCP correspondante(s).

12. Noeud de réseau selon la revendication 11, adapté en outre pour mettre en oeuvre un procédé selon l'une quelconque des revendications 2 à 6.

13. Noeud de réseau adapté pour fonctionner comme noeud principal, MN, en double connectivité avec un équipement utilisateur, UE, le noeud de réseau étant en outre adapté pour :
recevoir, d'un second noeud de réseau fonctionnant comme noeud secondaire, SN, en double connectivité avec l'UE, une indication selon laquelle une configuration de groupe de cellules secondaires, SCG, pour l'UE doit être libérée, la libération de la configuration SCG impliquant la libération de la configuration PHY, MAC et RLC pour un ou plusieurs supports SCG ou supports divisés sans libération de la ou des configuration(s) PDCP correspondante(s).

14. Noeud de réseau selon la revendication 13, adapté en outre pour mettre en oeuvre un procédé selon l'une quelconque des revendications 8 à 10.

15. Produit programme informatique comprenant des instructions de programme informatique destinées à être exécutées par des circuits de traitement d'un noeud de réseau, les instructions de programme informatique étant configurées pour amener le noeud de réseau à exécuter un procédé selon l'une quelconque des revendications 1 à 10.

**FIGURE 1**

EP 4 282 223 B1

**FIGURE 2**

**FIGURE 3**

**FIGURE 4**

| UE | MN | SN | S-GW | MME |
|---|---|---|---|---|

1. SgNB Modification Request

2. SgNB Modification Request Acknowledge

3. RRCConnectionReconfiguration

4. Random access procedure

5. RRCConnectionReconfigurationComplete

6. SgNB Reconfiguration Complete

7. Random access procedure

8. SNStatus Transfer

9. Data Forwarding

10. Secondary RAT Data Volume Report

11. Path Update procedure

# FIGURE 5

| UE | MN | SN | S-GW | MME |
|---|---|---|---|---|

1. SgNB Modification Required

For providing of Forwarding addresses, SgNB Security Key

2. SgNB Modification Request

3. SgNB Modification Request Acknowledge

4. RRCConnectionReconfiguration

5. RRCConnectionReconfigurationComplete

6. SgNB Modification Confirm

7. Random Access Procedure

8. SNStatus Transfer

9. Data Forwarding

10. Secondary RAT Data Usage Report

11. Path Update procedure

# FIGURE 6

| UE | MN | SN | UPF | AMF |
|----|----|----|----|-----|

1. SN Modification Request

2. SN Modification Request Acknowledge

2a. Xn-U Address information

3. RRC reconfiguration message

3a. Random Access Procedure

4. RRC reconfiguration complete message

5. SN Reconfiguration Complete

6. Random Access Procedure

7. SNStatus Transfer

8. Data Forwarding

9. Secondary RAT Data Volume Report

10. PDU Session Path Update procedure

EP 4 282 223 B1

**FIGURE 7**

| UE | MN | SN | UPF | AMF |

1. SN Modification Required

2/3. MN initiated SN Modification
procedure in some cases

4. RRCConnectionReconfiguration
(Carry SN RRC reconfiguration message)

5. RRCConnectionReconfigurationComplete
(Carry SN RRC reconfiguration complete)

6. SN Modification Confirm (Carry
SN RRC reconfiguration complete)

7. Random Access Procedure

8. SNStatus Transfer

9. Data Forwarding

10. Secondary RAT Data Usage Report

11. PDU Session Path
Update procedure

# FIGURE 8

| S-NG-RAN node | | M-NG-RAN node |
|---|---|---|

S-NODE SCG RELEASE REQUEST

S-NODE SCG RELEASE CONFIRM

**FIGURE 9**

SEND, TO MASTER NODE (MN), INDICATION THAT SECONDARY
CELL GROUP (SCG) CONFIGURATION FOR UE IS TO BE RELEASED
1010

**FIGURE 10**

RECEIVE, FROM SECONDARY NODE (SN), INDICATION THAT
SECONDARY CELL GROUP (SCG) CONFIGURATION FOR UE IS TO BE
RELEASED
1110

**FIGURE 11**

**FIGURE 12**

1343A NETWORK

1343B NETWORK

1300

1301 PROCESSOR

1305 INPUT/OUTPUT INTERFACE

1309 RF INTERFACE

1311 NETWORK CONNECTION INTERFACE

1313 POWER SOURCE

1302 BUS

1315 MEMORY

1317 RAM

1319 ROM

1321 STORAGE MEDIUM

1323 OPERATING SYSTEM

1325 APPLICATION PROGRAMS

1327 DATA

1331 COMMUNICATION SUBSYSTEM

1333 TRANSMITTER

1335 RECEIVER

**FIGURE 13**

FIGURE 14

**FIGURE 15**

**FIGURE 16**

BEGIN

1710
HOST COMPUTER
PROVIDES USER DATA

1711
HOST COMPUTER
EXECUTES HOST
APPLICATION

1720
HOST COMPUTER
INITIATES
TRANSMISSION
CARRYING THE USER
DATA TO THE UE

1730
BASE STATION
TRANSMITS THE USER
DATA

1740
UE EXECUTES CLIENT
APPLICATION

END

## FIGURE 17

BEGIN

1810
HOST COMPUTER
PROVIDES USER DATA

1820
HOST COMPUTER
INITIATES TRANSMISSION
CARRYING THE USER DATA
TO THE UE

1830
UE RECEIVES THE USER
DATA

END

**FIGURE 18**

BEGIN

1910
UE RECEIVES INPUT
DATA PROVIDED AT
HOST COMPUTER

1911
UE EXECUTES
CLIENT
APPLICATION

1920
UE PROVIDES USER
DATA

1921
UE EXECUTES
CLIENT
APPLICATION

1930
UE INITIATES
TRANSMISSION OF
THE USER DATA TO
THE HOST
COMPUTER

1940
HOST COMPUTER
RECEIVES USER
DATA
TRANSMITTED
FROM THE UE

END

*FIGURE 19*

BEGIN

2010
BASE STATION RECEIVES
USER DATA FROM UE

2020
BASE STATION INITIATES
TRANSMISSION OF
USER DATA TO THE
HOST COMPUTER

2030
HOST COMPUTER
RECEIVES THE USER
DATA

END

*FIGURE 20*

**EP 4 282 223 B1**

## REFERENCES CITED IN THE DESCRIPTION

### Patent documents cited in the description

- WO 2019031948 A1